(19) Europäisches Patentamt
European Patent Office
Office européen des brevets

(11) Numéro de publication: **0 424 286 B1**

# (12) FASCICULE DE BREVET EUROPEEN

(45) Date de publication de fascicule du brevet: **09.11.94**

(51) Int. Cl.$^5$: **C08G 73/12**, C08F 222/40

(21) Numéro de dépôt: **90420442.7**

(22) Date de dépôt: **11.10.90**

(54) **Polymères à groupements imides faits à partir de diamines encombrées.**

(30) Priorité: **16.10.89 FR 8913713**

(43) Date de publication de la demande:
**24.04.91 Bulletin 91/17**

(45) Mention de la délivrance du brevet:
**09.11.94 Bulletin 94/45**

(84) Etats contractants désignés:
**AT BE CH DE DK ES FR GB GR IT LI LU NL SE**

(56) Documents cités:
**EP-A- 0 274 968** **EP-A- 0 277 887**
**EP-A- 0 292 434** **EP-A- 0 296 994**
**FR-A- 2 472 586** **GB-A- 2 093 847**

(73) Titulaire: **CIBA-GEIGY AG**
**Klybeckstrasse 141**
**CH-4002 Basel (CH)**

(72) Inventeur: **Camberlin, Yves**
**68 bis, quai Clemenceau**
**F-69300 Caluire (FR)**

**EP 0 424 286 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

Dans la demande de brevet français FR-A-2.608.613 on a décrit et revendiqué des polymères à groupements imides, pouvant se trouver sous forme de prépolymères thermodurcissables, qui comprennent le produit de réaction, à une température allant de 50 ° C à 300 ° C, entre :

- (a) un N,N'-bis-imide ou une association de plusieurs bis-imides de formule :

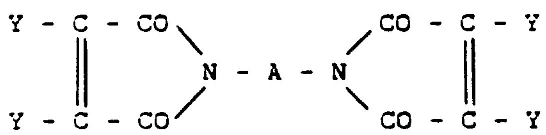

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylène ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

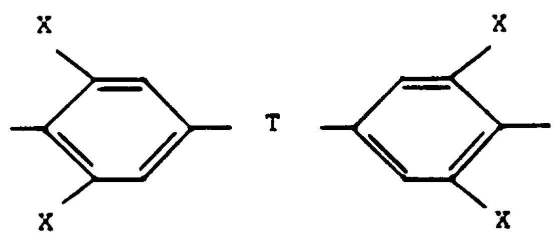

dans laquelle T représente un lien valentiel simple ou un groupement :

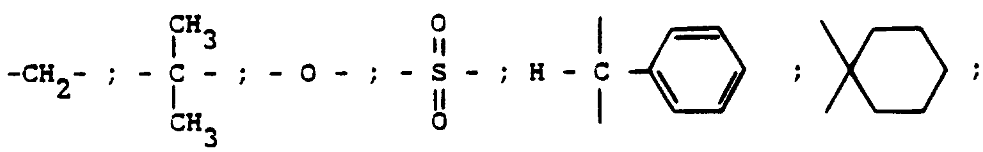

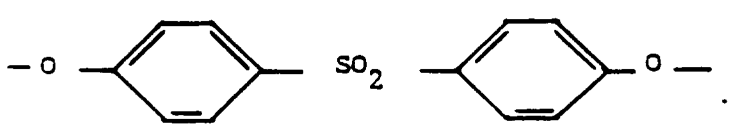

et les symboles X, identiques ou différents, représentent chacun un atome d'hydrogène, un radical méthyle, éthyle ou isopropyle ;

- (b) une ou plusieurs diamine(s) biprimaire(s) encombrée(s) prise(s) dans le groupe formé par :

(i) les espèces répondant à la formule générale :

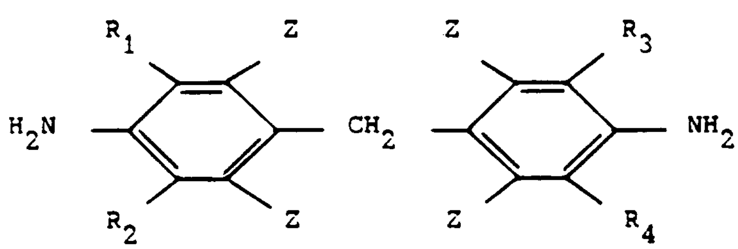

(II)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydogène ou un atome de chlore ;

(2i) et les espèces répondant à la formule générale :

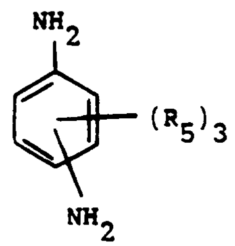

(III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- (c) éventuellement un ou plusieurs monomère(s) non halogéné(s) autre(s) qu'un bis-imide de formule (I) et comprenant une ou plusieurs double(s) liaison(s) carbone-carbone polymérisable(s) ;

- et (d) éventuellement un catalyseur de polymérisation.

Un premier avantage lié à la mise en oeuvre de l'invention conforme à la demande française précitée provient de l'encombrement stérique du réactif aminé (b) qui est responsable d'une réactivité plus faible des constituants du milieu de polymérisation, par comparaison avec ce qui se passe avec les polyamino-bis maléimides issus de diamines non encombrées. Cette réactivité plus faible des constituants du milieu de polymérisation présente un intérêt particulier non seulement pour la réalisation de pièces faisant appel à une mise en oeuvre d'un prépolymère l'état fondu, mais encore pour la réalisation de pièces faisant appel à une mise en oeuvre d'un prépolymère sous forme de solution dans un solvant. En effet, la viscosité du prépolymère à l'état fondu ou celle de la solution du prépolymère évolue plus faiblement et cela facilite grandement la mise en oeuvre du prépolymère, notamment dans des applications nécessitant une durée de travail de plusieurs heures.

Un second avantage lié à la mise en oeuvre de l'invention conforme à la demande française précitée réside dans le fait que les polymères sont préparés sans prendre des précautions particulières sur le plan de l'hygiène étant donné que les diamines encombrées (b) employées ne présentent pas les risques de toxicité qui sont attachés en général aux diamines biprimaires aromatiques non encombrées.

On a déjà décrit des polymères thermodurcissables à base de groupements imide et époxy, qui comprennent le produit de réaction d'un N,N'-bis-imide de formule (I), d'une diamine biprimaire et d'une résine époxy (cf. EP-A-0 277 887).

Il a maintenant été trouvé, et c'est ce qui constitue un premier objet de la présente invention, que l'on peut apporter des améliorations particulières à la technique décrite dans la demande française précitée par l'ajout, dans le milieu de préparation des polymères conformes à cette technique antérieure de deux ingrédients supplémentaires :

- l'un consistant dans un composé choisi dans le groupe constitué par : une résine époxy chlorée ou bromée ; un N,N'-alkylène-bis-tétrahalogénophtalimide ; un produit contenant deux radicaux phényle reliés directement par un lien valentiel simple, un groupement divalent ou un atome, dans lequel chaque radical phényle est substitué par un radical (méth)allyloxy et par au moins deux atomes de chlore ou de brome ; une résine époxy non halogénée ; et un mélange de deux ou de plus de deux des composés précités entre eux ; cette mesure permet d'obtenir notamment un faible coefficient d'expansion thermique pour les polymères qui sont ainsi préparés ainsi que, dans le cas où un composé halogéné est utilisé, une excellente résistance à la combustion ;
- l'autre consistant dans un alkénylphénol ; cette mesure permet notamment d'améliorer les propriétés de résilience du polymère durci et ses propriétés d'adhérence (évaluées par exemple par des mesures de résistance au pelage) sur un substrat métallique comme par exemple une feuille de cuivre.

L'objectif visé par la présente invention est de fournir des polymères à groupements imides qui peuvent être avantageusement utilisés pour fabriquer, par exemple, des articles intermédiaires préimprégnés permettant de construire de manière connue en soi des circuits électroniques multicouches pour lesquels les opérations classiques de coupage, usinage et surtout de perçage de trous ne se traduisent pas par de graves défauts tels que, en particulier, des phénomènes de délaminage, de fissurations intralaminaires et de déchirement.

Il a encore été trouvé, et c'est ce qui constitue un autre objet de la présente invention, que d'une part le choix des diamines biprimaires encombrées utilisables dans la présente invention peut être élargi à des espèces du type de celles de formule (II) contenant deux radicaux (amino-4) phényle encombrés, mais reliés, cette foie entre eux par un groupement divalent autre que $-CH_2-$, et d'autre part le catalyseur facultatif est un initiateur de polymérisation radicalaire.

Plus précisément, la présente invention concerne des polymères à groupements imides qui comprennent le produit de réaction, à une température allant de 50 ° C à 300 ° C, entre :

-(a) un N,N'-bis-imide ou une association de plusieurs bis-imides répondant à la formule (I) et aux définitions données ci-avant ;

-(b) une ou plusieurs diamine(s) biprimaire(s) aromatique(s) encombrée(s) ; et

- éventuellement (c) un ou plusieurs monomère(s) non halogéné(s) autre(s) qu'un bis-imide de formule (I) et comportant une ou plusieurs double(s) liaison(s) carbone-carbone polymérisable(s) ; et

- éventuellement encore (d) un catalyseur de polymérisation, lesdits polymères à groupements imides étant caractérisés par les points suivants :

- point 1 : le milieu de réaction qui sert à les préparer contient en tant que réactif aminé (b) une ou plusieurs diamine(s) biprimaire(s) encombrée(s) prise(s) dans le groupe formé par :

(i) les espèces répondant à la formule générale :

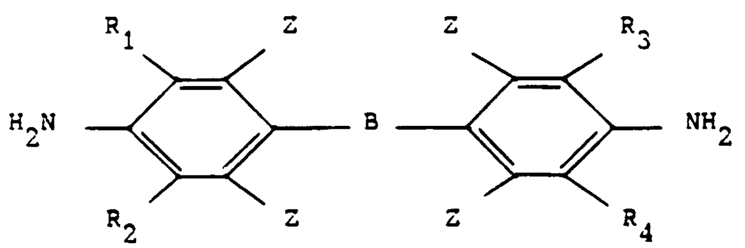

(IV)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydogène ou un atome de chlore ;

. le symbole B représente un radical divalent choisi dans le groupe formé par les radicaux : $-CH_2-$ ;

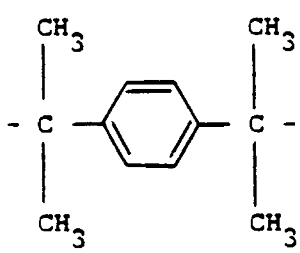

et

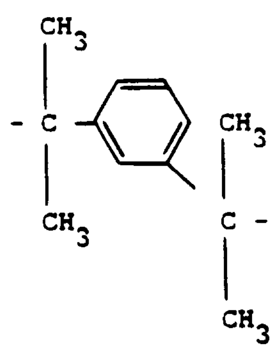

(2i) et les espèces répondant à la formule générale :

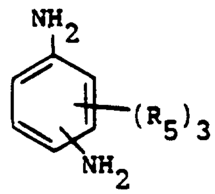

(III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- point 2 : le milieu de réaction contient en outre deux additifs obligatoires (e) et (f) :

. (e) consistant dans un composé choisi dans le groupe formé par:

* (e1) une résine époxy chlorée ou bromée ;

* (e2) un N,N'-alkylène-bis-tétrahalogénophtalimide de formule :

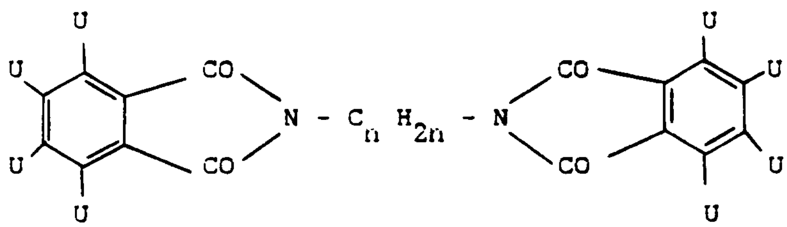

(V)

dans laquelle :

. les symboles U, identiques ou différents, représentent chacun un atome de chlore ou de brome ;

. le radical alkylène $-C_n H_{2n}-$ peut être linéaire ou ramifié ;

. n est un nombre entier égal à 1, 2, 3 ou 4 ;

* (e3) un produit halogéné de formule :

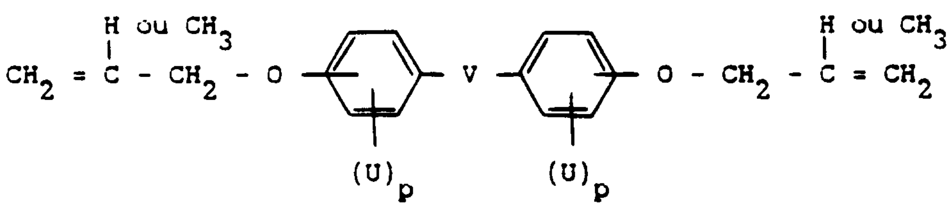

(VI)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (e4) une résine époxy non halogénée ;

* et (e5) un mélange de deux ou de plus de deux des composés (e1) à (e4) précité entre eux ;

(f) consistant dans un composé comprenant un ou plusieurs alkénylphénol(s) de formule :

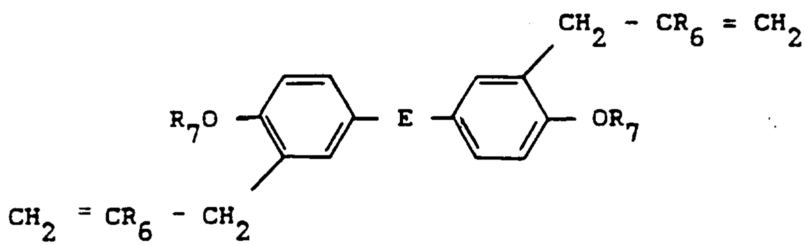

(VII)

dans laquelle :

. le symbole E représente un lieu valentiel simple ou radical divalent choisi dans le groupe formé par les radicaux ;

$-CH_2-$ ; $-CH_2-CH_2-$ ; $-C(CH_3)_2-$ ; $-O-$ ; $-S-$ ; $-SO-$ ; et $-SO_2-$ ;

. les symboles $R_6$, identiques ou différents, représentent chacun un atome d'hydrogène ou un radical méthyle ;

. les symboles $R_7$, identiques ou différents, représentent chacun un atome d'hydrogène ou un radical alkyle linéaire ou ramifié ayant de 1 à 6 atomes de carbone ou un radical phényle ;

- point 3 : le milieu de réaction, dans le cas où il est fait appel à un catalyseur (d), contient en tant que catalyseur un initiateur de polymérisation rédicalaire consistant dans un péroxyde organique ou l'azo-bis-isobutyronitrile.

Par résine époxy chlorée ou bromée (e1), on entend définir une résine époxy qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis-(hydroxy-4 phényl)-2,2 propane, le bis(hydroxy-4 phényl) méthane, le bis(hydroxy-4 phényl) méthyl-phényl-méthane, les bis(hydroxy-4 phényl)tolyl-méthanes ; le résorcinol ; l'hydroquinone ; le pyrocatéchol ; le dihydroxy-4,4' diphényle ; et les produits de condensation des phénols précités avec un aldéhyde.

L'expression "poids d'équivalent époxy", qui apparaît ci-avant, peut être définie comme étant le poids de résine (en gramme) renferment une fonction époxy

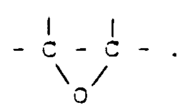

On choisit de préférence une résine époxy chlorée ou bromée possédant un poids d'équivalent époxy compris entre 250 et 500. On utilise tout préférentiellement dans la présente invention une résine époxy (e1) consistant dans une résine appartenant à la famille des éthers glycidiques des bis(hydroxyphényl)-alcanes, bromés sur les noyaux aromatiques, dont on a parlé ci-avant à propos de la définition détaillée de la résine (e1).

S'agissant du composé (e2) de formule (V), on choisit de préférence un N,N'-alkyléne-bis-tétrabromophtalimide. On utilise tout préférentiellement dans la présente invention le N,N'-éthylène-bis-tétrabromophtalimide.

S'agissant du composé (e3) de formule (VI), on choisit de préférence un bis(allyloxydibromophényl)-alcane de formule :

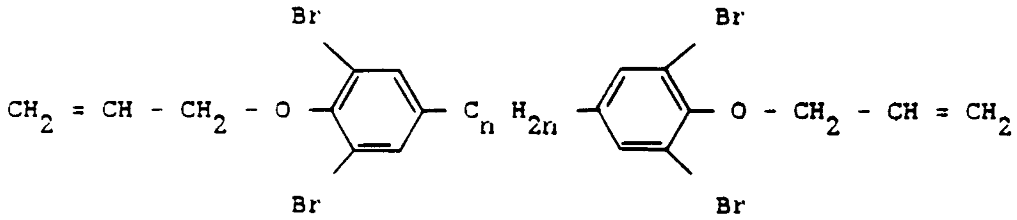 (VIII)

dans laquelle n est un nombre entier égal à 1, 2 ou 3. On utilise tout préférentiellement dans la présente invention le bis(allyloxy-4 dibromo-3,5 phényl)-2,2 propane.

Par résine époxy non halogénée (e4), on entend définir une résine époxy qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant à propos de la définition de la résine (e1).

On choisit de préférence une résine époxy non halogénée possédant un poids d'équivalent époxy compris entre 150 et 300. On utilise tout préférentiellement une résine époxy (e4) consistant dans une résine appartenant à la famille des éthers glycidiques des bis(hydroxyphényl)alcanes,non halogénés sur les noyaux aromatiques, dont on a parlé ci-avant à propos de la définition détaillée de la résine (e1).

S'agissant des mélanges (e5), on choisit de préférence un mélange de deux ou de plus de deux des composés (e1) à (e4) préférés qui ont été mentionnés ci-avant.

La quantité de l'additif (e) représente généralement 2 % à 30 % et, de préférence, 3 % à 15 % du poids du mélange bis-imide(s) (a) + diamine(s) (b) + éventuellement réactif (c).

On a constaté que la quantité de chlore ou de brome qui peut être . apportée dans les polymères selon l'invention par l'additif (e) est de nature à influencer certaines propriétés des polymères durcis obtenus, notamment les propriétés en matière de stabilité thermique et celles en matière d'adhérence des polymères sur des métaux tels que par exemple le cuivre. Dans ce cadre, les meilleurs résultats sont obtenus lorsque cette quantité de chlore ou de brome apportée par l'additif (e), exprimée par le pourcentage en poids de chlore élémentaire ou de brome élémentaire par rapport au poids du mélange global bis-imide(s) (a) + diamine(s) (b) + réactif facultatif (c) + additifs (e) et (f), représente au plus 8 % ; cette quantité de chlore ou de brome se situe de préférence dans l'intervalle allant de 1 à 6 %. On peut ajuster aisément la quantité de chore ou de brome à la valeur souhaitée en mettant en oeuvre par exemple des résines époxy (e1) ayant une teneur en chlore ou en brome plus ou moins importante ou en partant de mélanges de résines époxy chlorées ou bromées (e1) avec des résines époxy non halogénées (e4) ou encore en partant de mélanges de composés (e2) et/ou (e3) avec des résines époxy non halogénées (e4).

A titre d'exemples spécifiques d'alkénylphénols de formule (VII), on peut citer en particulier :

- le dihydroxy-4,4' diallyl-3,3' bisphényle,
- le bis(hydroxy-4 allyl-3 phényl)méthane,
- le bis(hydroxy-4 allyl-3 phényl)éther,
- le bis(hydroxy-4 allyl-3 phényl)-2,2 propane ou O,O'-diallyl-bisphénol A,
- l'éther méthylique correspondant à l'un ou l'autre des alkénylphénols précités.

Les alkénylphénols se préparent, ainsi que cela est bien connu, par transposition thermique (claisen) des éthers allyliques de phénols, lesquels éthers allyliques sont obtenus de manière connue en soi en faisant réagir par exemple des phénols et le chlorure d'allyle en présence d'un hydroxyde de métal alcalin et de solvants.

Par l'expression apparaissant ci-avant "composé comprenant un ou plusieurs alkénylphénol(s)", on entend signifier que l'additif (f) peut être constitué :

- soit par un ou plusieurs alkénylphénol(s) de formule (VII),
- soit par un mélange contenant (i) un ou plusieurs alkénylphénol(s) de formule (VII) et (2i) un ou plusieurs éther(s) allylique(s) correspondant(s) de ce (ou ces) phénol(s), c'est-à-dire un ou plusieurs éther(s) allylique(s) duquel (ou desquels) dérive(nt) par transposition ce (ou ces) phénol(s). Un pareil mélange (2i), qui peut être avantageusement utilisé, est par exemple le produit brut obtenu par transposition thermique partielle du (ou des) éther(s) allylique(s) correspondant(s).

On utilise de préférence, pour la mise en oeuvre de la présente invention, un additif (f) consistant dans l'O,O'-diallyl-bisphénol A pris seul ou en mélange avec l'éther diallylique du bisphénol A.

La quantité de l'additif (f) représente généralement 2 % à 30 % et, de préférence, 5 % à 15 % du poids du mélange bis-imide(s) (a) + diamine(s) (b) + éventuellement réactif (c).

A titre d'exemples spécifiques de bis-imides (a) de formule (I) on peut citer en particulier les composés indiqués dans la demande française FR-A-2.608.613, c'est-à-dire :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide.

Ces bis-maléimides peuvent être préparés selon les procédés décrits dans le brevet américain US-A-3.018.290 et le brevet anglais GB-A-1.137.290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A titre d'exemples spécifiques de diamines encombrées (b) de formules (IV) et (III), on peut citer en particulier :

- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis (amino-4 diméthyl-3,5 $\alpha,\alpha$-diméthylbenzyl)-1,4 benzène,
- le bis (amino-4 diméthyl-3,5 $\alpha,\alpha$-diméthylbenzyl)-1,3 benzène,
- le diamino-1,3 diéthyl-2,4 méthyl-6 benzène,
- le diamino-1,3 méthyl-2 diéthyl-4,6 benzène.

Ces diamines encombrées peuvent être préparées selon les procédés décrits dans le brevet anglais GB-A-852.651 et le brevet américain US-A-3.481.900. On utilise de préférence, pour la mise en oeuvre de la présente invention, le diamino-4,4' tétraméthyl-3,3'5,5' diphénylméthane, le diamino-4,4' tétraéthyl-3,3'5,5' diphénylméthane, le diamino-4,4' diéthyl-3,3' diméthyl-5,5' diphénylméthane et leurs mélanges.

Les quantités de N',N-bis-imide(s) (a) et de diamine(s) encombrée(s) (b) sont choisies de façon à ce que le rapport r :

$$\frac{\text{nombre de moles de bis-imide(s) (a)}}{\text{nombre de moles de diamine(s) (b)}}$$

se situe généralement dans l'intervalle allant de 1,5/1 à 20/1 et, de préférence, allant de 2/1 à 5/1.

Il peut être avantageux dans certains cas de modifier les polymères selon la présente invention par emploi supplémentaire d'un réactif copolymérisable (c) et/ou d'un catalyseur (d).

Comme réactif facultatif (c) qui convient bien, on peut citer en particulier les composés indiqués dans la demande française FR-A-2.608.613, à savoir :

(c1) soit un ou plusieurs monomères de formule :

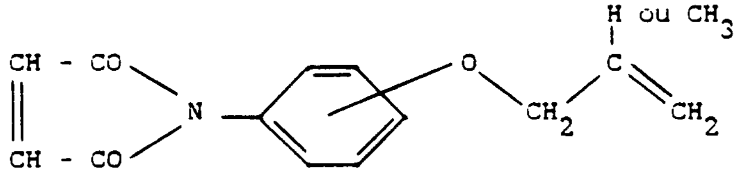

(IX)

dans laquelle le radical allyloxy ou méthallyloxy est en position ortho, métha ou par par rapport à l'atome de carbone du cycle benzénique relié à l'azote ;

(c2) soit un composé comprenant :

- un mélange d'un monomère de formule :

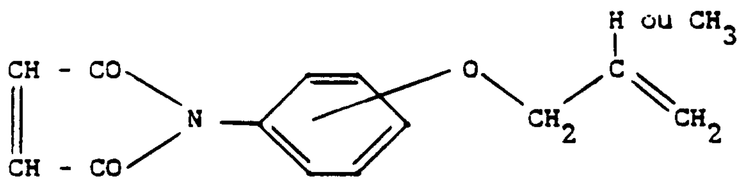

(IX)

dans laquelle le radical allyloxy ou méthallyloxy est en position ortho, méta ou para par rapport à l'atome de carbone du cycle benzénique relié à l'azote,

- avec :

. au moins un dérivé monosubstitué de formule :

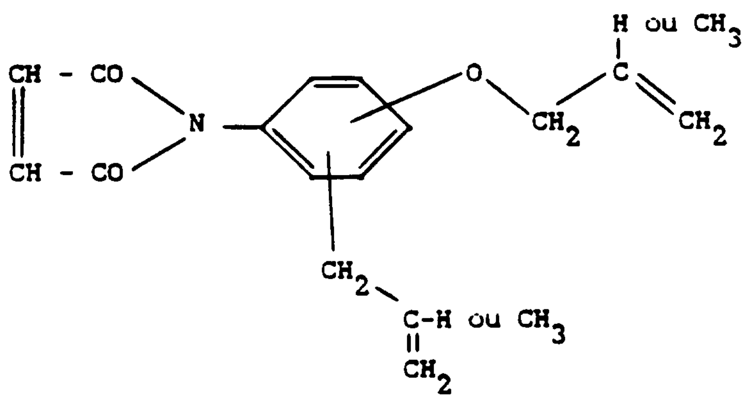

(X)

. et éventuellement un ou plusieurs dérivé(s) disubstitué(s) de formule :

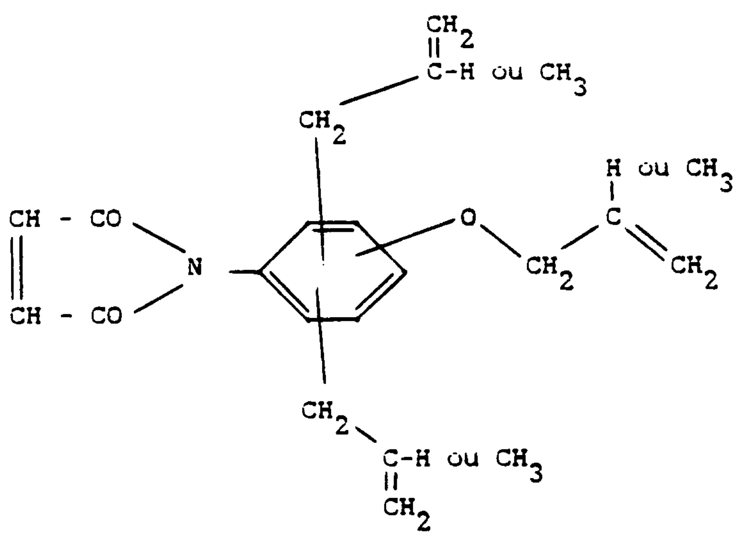

(XI)

Dans le composé précité servant de réactif (c2), les proportions des divers constituants du mélange des produits de formules (IX), (X) et éventuellement (XI) peuvent varier dans des larges limites. De manière générale, les proportions des constituants sont choisies entre les limites suivantes (exprimant le pourcentage pondéral de chacun des constituants dans le mélange) :

- au moins 30 %, et de préférence de 50 % à 80 % de N-(méth)allyloxyphénylmaléimide de formule (IX),
- de 5 % à 50 % et de préférence de 10 % à 35 % de dérivé(s) mono-(méth)allyl substitué(s) de formule (X),
- et de 0 % à 20 % et de préférence de 0 % à 15 % de dérivé(s) di-(méth)allyl substitué(s) de formule (XI),

la somme des constituants devant dans chaque cas être égale à 100 % en poids.

(c3) soit un ou plusieurs hétérocycle(s) substitué(s) comportant une ou plusieurs double(s) liaison(s) carbone-carbone.

Il doit être entendu que l'on peut utiliser, comme réactif (c), des mélanges (c1 + c3) ou (c2 + c3).

S'agissant du réactif facultatif (c1), il est choisi parmi :

- le N-(allyloxy-2 phényl)maléimide,
- le N-(allyloxy-3 phényl)maléimide,
- le N-(allyloxy-4 phényl)maléimide,
- le N-(méthallyloxy-2 phényl)maléimide,
- le N-(méthallyloxy-3 phényl)maléimide,
- le N-(méthallyloxy-4 phényl)maléimide,
- et leurs mélanges.

Les maléimides de formule (IX) sont des produits connus qui sont décrits dans la demande de brevet européen EP-A-0.208.634.

S'agissant du réactif facultatif (c2), on utilise de préférence comme composé comprenant un mélange de N-(méth)allyloxyphénylmaléimide de formule (IX) avec un ou plusieurs dérivé(s) de substitution (méth)-allylé(s) de formule(s) (X) et éventuellement (XI), le produit brut obtenu par mise en oeuvre du procédé décrit dans la demande de brevet européen EP-A-0.274.967.

S'agissant du réactif facultatif (c3), il est choisi parmi : les vinylpyridines, la N-vinylpyrrolidone, l'isocyanurate d'allyle, le vinyltétrahydrofuranne, et leurs mélanges.

S'agissant de la quantité du réactif facultatif (c), elle représente généralement moins de 60 % et, de préférence, de 2 % à 25 % du poids total des réactifs (a) et (b).

Le catalyseur (d) facultatif est un initiateur de polymérisation radicalaire consistant avantageusement dans un péroxyde organique comme par exemple le péroxyde de dicumyle, le péroxyde de lauroyle, ainsi que dans l'azo-bis-isobutyronitrile.

Selon la nature du composé (d) et selon la vitesse de polymérisation souhaitée au stade de la mise en oeuvre, on utilise le catalyseur à un taux se situant dans l'intervalle allant généralement de 0,01 à 5 % en poids par rapport à l'ensemble des réactifs (a) + (b) + éventuellement (c) et, de préférence, allant de 0,1 à 1 %.

Divers adjuvants peuvent être incorporés à divers moments dans les polymères selon l'invention. Ces adjuvants, habituellement utilisés et bien connu de l'homme de l'art, peuvent être par exemple des stabilisants ou des inhibiteurs de dégradation, des lubrifiants ou des agents de démoulage, des colorants ou des pigments, des charges pulvérulentes ou en particules comme des silicates, des carbonates, le kaolin, la craie, le quarts pulvérisé, le mica ou des microbilles de verre. On peut aussi incorporer des adjuvants modifiant la structure physique du produit obtenu comme par exemple des agents porogènes ou des agents de renforcement fibreux tels que notamment des fibrilles de carbone, de polyimide, de polyamides aromatiques, des whiskers.

Les polymères selon l'invention peuvent être préparés par chauffage direct du ou des bis-imide(s) (a), du réactif aminé (b) et des additifs (e) et (f), en présence éventuellement du réactif (c) et/ou du catalyseur (d), au moins jusqu'à l'obtention d'un mélange liquide homogène. La température peut varier en fonction de l'état physique des composés en présence mais elle se situe généralement entre 50 °C et 300 °C. Il est avantageux d'amener et de maintenir les composés de départ dans un état de mélange intime avant et pendant le chauffage à l'aide par exemple d'une bonne agitation. Quand on utilise le réactif (c) et/ou le catalyseur (d), il(s) est(sont) de préférence ajouté(s) dans le mélange réactionnel bien agité après avoir réalisé la fusion du mélange (a) + (b) + (e) + (f). Lorsque le catalyseur (d) est particulièrement actif, pour éviter son encapsulation dans le réseau polymère engendré, il est souhaitable de l'ajouter dans un solvant ou diluant compatible avec le milieu réactionnel ; on a trouvé qu'il pouvait être intéressant d'utiliser comme solvant ou diluant un des liquides organiques polaires dont on parle ci-après.

La préparation des polymères selon l'invention peut aussi être effectuée par chauffage du mélange des réactifs en présence de quantités variables d'un diluant organique qui est liquide dans une partie au moins de l'intervalle 50 °C-250 °C. Parmi ces diluants, on peut mentionner en particulier des hydrocarbures aromatiques comme les xylènes et le toluène, des hydrocarbures halogénés comme les chlorobenzènes,

des liquides organiques polaires comme le dioxanne, le tétrahydrofuranne, l'oxyde de dibutyle, le diméthylformamide, le diméthylsulfoxyde, la N-méthylpyrrolidone, le diméthylacétamide, la cyclohexanone, le méthylglycol et la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les liquides organiques polaires cités dans le paragraphe précédent et ne présentant pas de ramollissement notable au-dessous de la température à laquelle ils commencent à se dégrader.

Mais ces polymères peuvent également se présenter sous l'aspect de prépolymères (P) solubles dans les solvants organiques polaires tels que par exemple ceux cités ci-avant et présentant un point de ramollissement à une température inférieure à 200 °C [en général ce point de ramollissement est compris entre 50° et 150 °C ].Ces prépolymères peuvent être obtenus en masse en chauffant le mélange des réactifs jusqu'à l'obtention d'un produit homogène ou pâteux à une température généralement située entre 50° et 180 °C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange intime préalable. Il existe là aussi une méthode préférée de mise en oeuvre du réactif (c) et/ou du catalyseur (d) facultatif et il s'agit de celle indiquée ci-avant à propos de la préparation directe de polymères durcis. La préparation des prépolymères peut également être effectuée en présence de quantités variables d'un diluant qui est liquide dans une partie au moins de l'intervalle 50°-180 °C. Dans ce contexte on peut avantageusement utiliser comme diluant les liquides organiques polaires dont on a parlé ci-avant.

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300 °C, généralement comprises entre 150° et 300 °C ; une mise en forme complémentaire peut être effectuée pendant le durcissement, éventuellement sous vide ou sous une pression super-atmosphérique, ces opérations pouvant également être consécutives.

Conformément à un mode de réalisation préféré de la présente invention, on opère en deux stades, le premier stade consistant à chauffer le mélange des réactifs entre 50° et 180 °C pour former un prépolymère (P), le second stade consistant à durcir le prépolymère (P), après lui avoir donné la forme désirée, par chauffage jusqu'à des températures de l'ordre de 300 °C, généralement comprises entre 150 °C et 300 °C.

Conformément à un autre mode de réalisation préféré de la présente invention, on opère en deux stades, mais en utilisant dans le premier stade un procédé de préparation en continu du prépolymère (P) consistant à introduire isolément dans un malaxeur à vis extrudeuse :

- d'une part le bis-imide (a) à l'état solide divisé, et
- d'autre part le groupe des réactifs constitué par le réactif aminé (b) et l'additif (f) à l'état solide, liquide ou fondu, et l'additif (e) à l'état liquide, avec au besoin le réactif (c) à l'état liquide et/ou le catalyseur (d) à l'état solide ou en solution, les différents réactifs de ce groupe pouvant eux-mêmes être introduits de leur côté ensemble ou séparément, en présence éventuellement d'un diluant qui est liquide dans une partie au moins de l'intervalle 50° - 180 °C.

Par l'expression "malaxeur à vis extrudeuse", on entend désigner un appareil qui ne présente pas de zone morte lors de la progression de la matière. Des appareils de ce genre qui peuvent comporter une ou plusieurs vis sont décrits dans l'ouvrage de E.G. FISHER-Extrusion of Plastics (Interscience Publisher 1964) pages 104 à 108. Ces malaxeurs peuvent comporter deux vis sans fin s'engrenant intimement l'une dans

l'autre et tournant dans le même sens ; un appareil de ce type équipé plus particulièrement pour la préparation de téréphtalates alcalins est décrit dans le brevet français FR-A-1.462.935. Une autre variété de malaxeurs utilisables est constituée par les appareils comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis. Des appareils de ce type sont décrits dans les brevets français FR-A-1.184.392, 1.184.393, 1.307.106 et 1.369.283.

Les polymères selon l'invention intéressent les domaines de l'industrie qui requièrent des matériaux doués de bonnes propriétés mécaniques et électriques ainsi que d'une grande inertie chimique à des températures de 200° à 300°C. A titre d'exemples, ils conviennent particulièrement bien pour la fabrication d'articles intermédiaires préimprégnés, par exemple du type tissu de verre/prépolymère (P), permettant de réaliser dans les meilleures conditions des circuits multicouches pour l'industrie des ordinateurs et pour l'électronique spaciale, aéronautique et industrielle. Ces préimprégnés permettent l'augmentation de la vitesse de perçage de trous dans les circuits, et cela même lorsque ces trous sont trés faiblement espacés, ce qui est le cas pour les circuits à forte densité de composants.

Les exemples suivants sont donnés à titre illustratif mais non limitatif.

EXEMPLE :

Dans un réacteur en verre muni d'un agitateur de type ancre, on introduit à température ambiante :

- 80 g (0,223 mole) de N,N'-4,4'-diphénylméthane-bis-maléimide, et
- 20 g (0,064 mole) de diamino-4,4' tétraéthyl-3,3',5,5' diphénylméthane,
- 10 g (0,032 mole) de O,O'-diallyl-bisphénol A, et
- 9 g d'une résine époxy bromée résultant de la condensation de bisphénol A tétrabromé et d'épichlorhydrine ; elle possède un taux de brome élementaire de l'ordre de 50 % en poids et un poids d'équivalent époxy de 450 ; elle est disponible dans le commerce sous la marque déposée QATREX de la Société DOW, type 6410 ; la quantité de brome apportée par la résine époxy, exprimée par le pourcentage en poids de brome élémentaire par rapport au poids de l'ensemble bis-imide + diamine + monomère copolymérisable (N-vinylpyrrolidone : cf. ci-après) + résine époxy + allylphénol, est égale à 3,54 %. Cette résine est introduite dans le réacteur sous forme de solution dans 5 g de cyclohexanone.

On plonge le réacteur dans un bain d'huile préchauffé à 160°C et le mélange est agité jusqu'à fusion complète des ingrédients engagés et obtention d'une masse homogène. La durée de cette étape est de 5 minutes. Le mélange fondu ainsi obtenu est refroidi jusqu'à 130°C et on introduit 8 g de N-vinylpyrrolidone-2, puis on laisse réagir l'ensemble sous agitation pendant 20 minutes.

On obtient ainsi un prépolymère présentant un point de ramollissement voisin de 80°C. On appelle point de ramollissement, la température approximative à laquelle une baguette de verre de 6 mm de diamètre peut s'enfoncer facilement de quelques millimètres dans le prépolymère. Ce prépolymère est soluble dans des solvants comme par exemple la N-méthylpyrrolidone, le diméthylformamide, la cyclohexanone et l'acétone.

Avec un premier lot de prépolymère préparé comme indiqué ci-avant, on confectionne des préimprégnés et des stratifiés cuivrés à 10 plis (10 couches de préimprégnés). Dans cette optique, on utilise une solution de prépolymère à 50 % en poids dans la N-méthylpyrrolidone pour enduire un tissu de verre fabriqué par la Société PORCHER sous la référence 7628 dont le grammage est de 200 g/m$^2$ et ayant subi un traitement par du gamma-aminopropyltriéthoxysilane (silane A 1100 d'UNION CARBIDE). Le tissu imprégné contient 40 g de prépolymère pour 60 g de tissu ; on le sèche en atmosphère ventilée à 160°C pendant 5 minutes. On découpe ensuite 10 carrés (15 x 15 cm) que l'on empile avec une feuille de cuivre de 35 µm d'épaisseur (de référence NT-TWS et commercialisée par la Société YATES), placée sur l'une des faces extérieures de l'empilement et on place l'ensemble entre les plateaux d'une presse dans les conditions suivantes :

- pression : 40.10$^5$ Pa,
- chauffage des plateaux de la presse : 1 heure à 190°C.

Après une post-cuisson à 200°C pendant 16 heures, on examine l'adhérence du cuivre sur lu stratifié à 10 plis préparé : cette adhérence, mesurée au dynamomètre par traction du cuivre à 90°C d'angle (selon la norme MIL P 55 617 B avec une vitesse du traction de 55 mm/min), est de l'ordre de 23 N/cm. Dans les mêmes conditions, le stratifié cuivré à 10 plis confectionné à partir d'un prépolymère préparé comme indiqué ci-avant mais en absence de O,O'-diallyl-bisphénol A, conduit à une adhérence de l'ordre de 19,6 N/cm.

Avec un second lot de prépolymère, on prépare des préimprégnés à 45 % en poids de prépolymère et des stratifiés comportant 5 plis dans les conditions décrites ci-avant (à noter qu'aucune feuille de cuivre n'est utilisée ici). Après une post-cuisson à 200°C pendant 16 heures, on effectue des mesures de combustibilité à l'aide du test UL 94 vertical (épaisseur des éprouvettes à base de stratifié : 0,8 mm ; le taux de résine dans le stratifié est d'environ 40 % en poids ; le temps de combustion est déterminé après conditionnement de 48 heures, à 23°C et sous 50 % d'humidité relative ; le classement est établi sur la moyenne de 10 résultats : 5 éprouvettes et 2 tests sur chaque éprouvette) : classement VO.

Avec un troisième lot de prépolymère, amené par broyage sous forme de poudre, on réalise un moulage par compression. La poudre obtenue est introduite, en quantité de 7,5 g, dans un moule cylindrique (diamètre : 10 cm) et on installe l'ensemble entre les deux plateaux circulaires d'une presse (ces plateaux sont adaptés à la taille du moule et préchauffés à 150°C) sur lesquels on applique une pression de 0,1 MPa. Lorsque la température de la matière atteint 125°C, on applique une pression de 4 MPa. Lorsque l'équilibre thermique est atteint, c'est-à-dire lorsque la température de la matière est à 150°C, on maintient l'ensemble dans ces conditions pendant 2 heures encore. On laisse ensuite refroidir le moule et son contenu pendant 1 heure sous 4 MPa de pression. Après démoulage, on obtient un objet moulé cylindrique (diamètre : 10 cm ; hauteur : 4 mm) que l'on place dans une étuve préchauffée à 200°C pendant 16 heures. Après démoulage, l'objet moulé est soumis à des essais de choc CHARPY non entaillé, selon les indications de la norme NF T 51035, pour mesurer la résilience surfacique Rc à 23°C : cette résilience est trouvée égale à 18 $kJ/m^2$ ; dans les mêmes conditions, l'objet moulé confectionné à partir d'un prépolymère préparé comme indiqué ci-avant mais en absence d'O,O'-diallyl-bisphénol A, conduit à une résilience qui est trouvée égale à 12 $kJ/m^2$. On mesure également l'énergie de propagation de fissure G1C, selon les revendications de la norme ASTM E 399 : elle est trouvée égale à 90 $J/m^2$ ; en absence de diallylphénol, elle est trouvée égale à 60 $J/m^2$.

Sur un quatrième lot de prépolymère, on prépare des préimprégnés à 40 % en poids de prépolymère et des stratifiés comportant 22 plis dans les conditions décrites ci-avant (aucune feuille de cuivre n'est utilisée ici aussi). Après une post-cuisson à 200°C pendant 16 heures, on effectue des mesures de coefficient d'expansion thermique selon l'axe Z des stratifiés (épaisseur des éprouvettes à base de stratifié : 3 mm). Ces mesures sont réalisées par Analyse Thermomécanique (TMA), à l'aide d'un appareil DU PONT modèle 982, avec une vitesse de montée en température de 10° K/min sous atmosphère d'azote. La valeur trouvée pour ce coefficient est de l'ordre de $35.10^{-6}$ $m.m^{-1}.K^{-1}$.

Par ailleurs, la température de transition vitreuse du polymère durci, qui a été évaluée lors des mesures effectuées par Analyse Thermomécanique, est trouvée égale à 250°C.

## Revendications

### Revendications pour les Etats contractants suivants : AT, BE, CH, DE, DK, FR, GB, GR, IT, LI, LU, NL, SE

**1.** Polymères à groupements imides qui comprennent le produit de réaction, à une température allant de 50°C à 300°C, entre :

- (a) un N,N'-bis-imide ou une association de plusieurs bis-imides de formule :

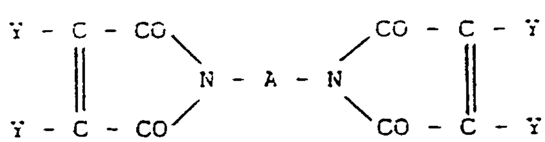

(I)

dans laquelle :

. les symboles Y, identiques ou différents, représentent chacun H, $CH_3$ ou Cl ;

. le symbole A représente un radical divalent choisi dans le groupe constitué par las radicaux : cyclohexylène ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux du formule :

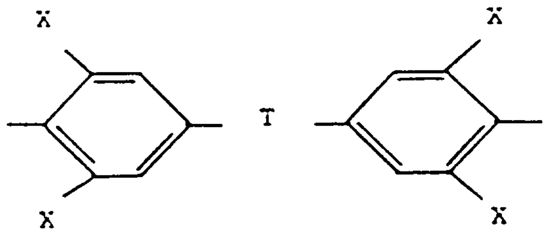

dans laquelle T représente un lien valentiel simple ou un groupement :

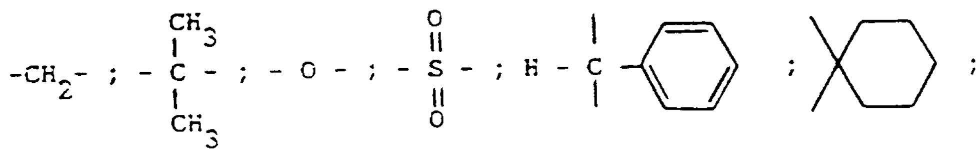

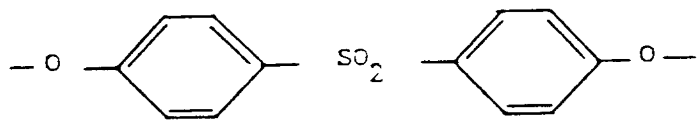

et les symboles X, identiques ou différents, représentent chacun un atome d'hydrogène, un radical méthyle, éthyle ou isopropyle ;

- (b) une ou plusieurs diamine(s) biprimaire(s) encombrée(s) ;
- (c) éventuellement un ou plusieurs monomère(s) non halogéné(s)

(c1) soit un ou plusieurs monomères de formule :

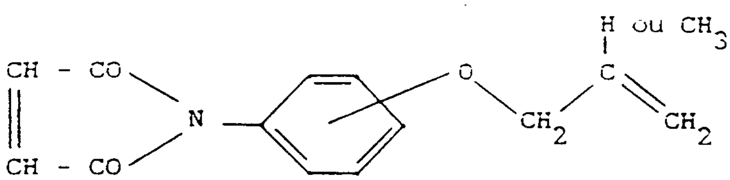
(IX)

dans laquelle le radical allyloxy ou méthallyloxy est en position ortho, métha ou par par rapport à l'atome du carbone du cycle benzénique relié à l'azote ;

(c2) soit un composé comprenant :

- un mélange d'un monomère de formule :

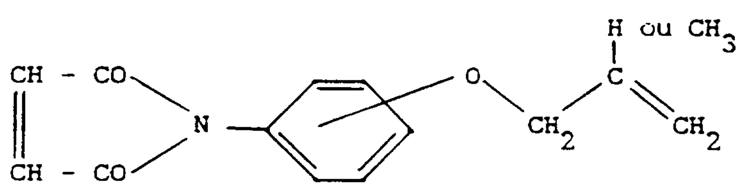
(IX)

dans laquelle le radical allyloxy ou méthallyloxy est en position ortho, méta ou para par rapport à l'atome de carbone du cycle benzénique relié à l'azote,

- avec :

. au moins un dérivé monosubstitué de formule :

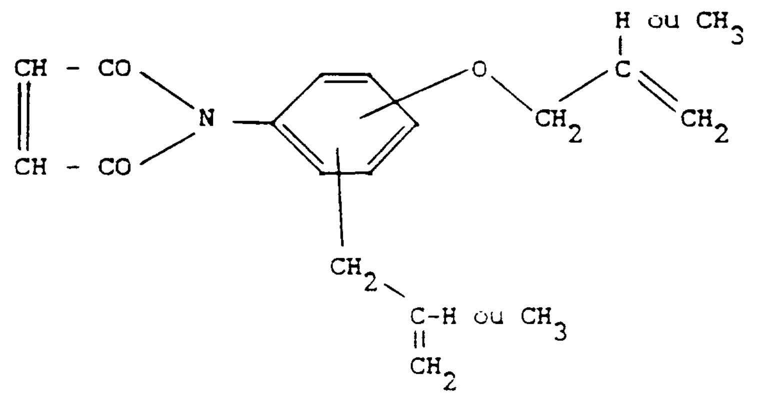

(X)

. et éventuellement un ou plusieurs dérivé(s) disubstitué(s) de formule :

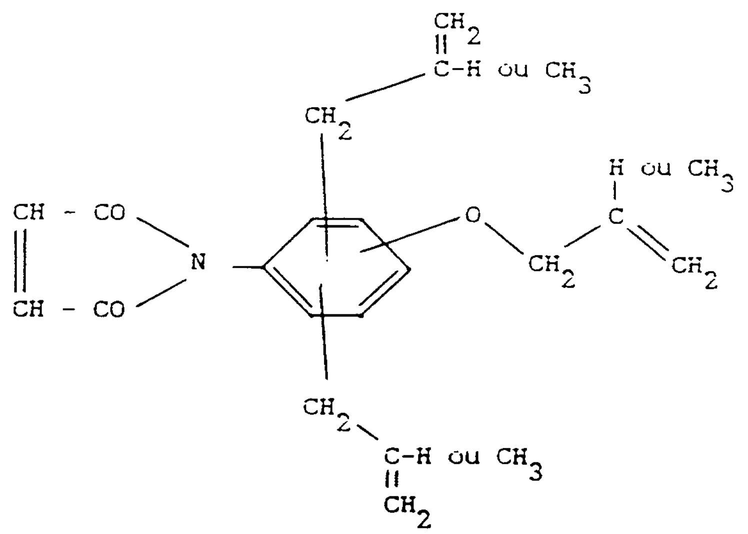

(XI)

(c3) soit un ou plusieurs hétérocycle(s) substitué(s comportant une ou plusieurs double(s) liaison(s) carbone-carbone

- et (d) éventuellement un catalyseur de polymérisation ; lesdits polymères à groupements imides étant caractérisés par les points suivants :

- point 1 : le milieu de réaction qui sert a les préparer contient en tant que réactif aminé (b) une ou plusieurs diamine(s) biprimaire(s) encombrée(s) prise(s) dans le groupe formé par :
(i) les espèces répondant à la formule générale :

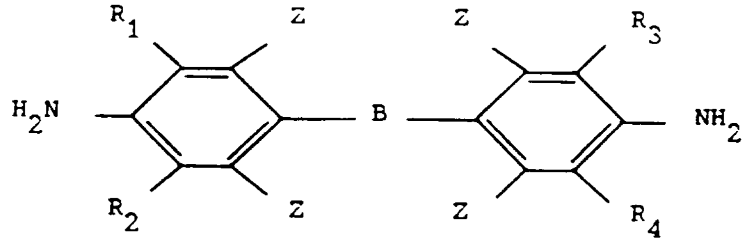

(IV)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydogène ou un atome de chlore ;

. le symbole B représente un radical divalent choisi dans le groupe formé par les radicaux : -$CH_2$ - ;

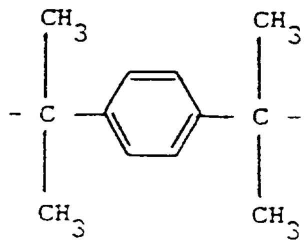

et

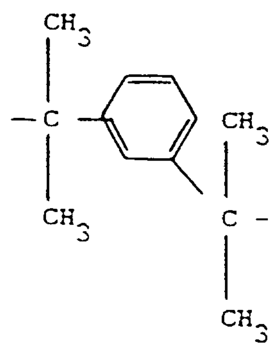

(2i) et les espèces répondant à la formule générale :

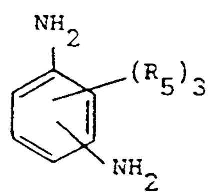

(III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- point 2 : le milieu de réaction contient en outre deux additifs obligatoires (e) et (f) :

. (e) consistant dans un composé choisi dans le groupe formé par:

* (e1) une résine époxy chlorée ou bromée ,

qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes;

le résorcinol ; l'hydroquinone ; le pyrocatéchol ; le dihydroxy-4,4' diphényle ; et les produits de condensation des phénols précités avec un aldéhyde;

* (e2) un N,N'-alkylène-bis-tétrahalogénophtalimide de formule :

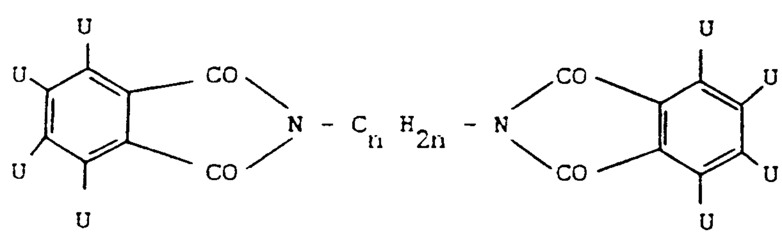

(V)

dans laquelle :

. les symboles U, identiques ou différents, représentent chacun un atome de chlore ou de brome ;

. le radical alkylène -$C_n$ $H_{2n}$- peut être linéaire ou ramifié ;

. n est un nombre entier égal à 1, 2, 3 ou 4 ;

* (e3) un produit halogéné de formule :

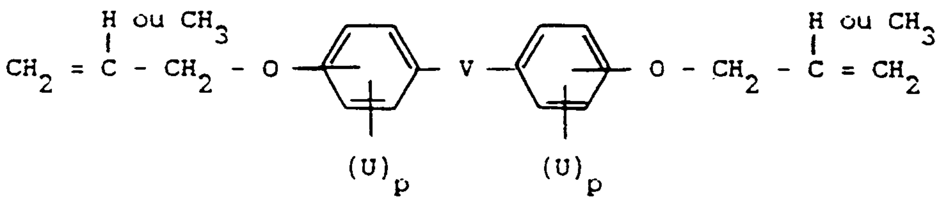

(VI)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (e4) une résine époxy non halogénée ,

qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant à propos de la définition de la résine (e1);

* et (e5) un mélange de deux ou de plus de deux des composés (e1) à (e4) précité entre eux ;

(f) consistant dans un composé comprenant un ou plusieurs alkénylphénol(s) de formule :

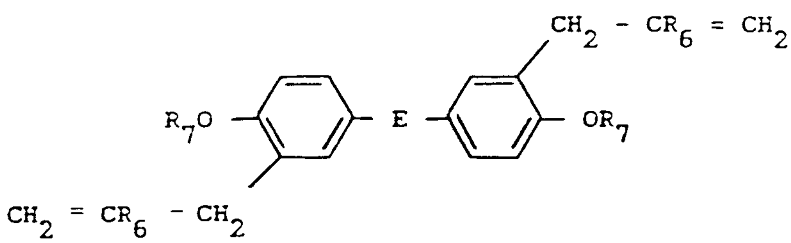

(VII)

dans laquelle :

. le symbole E représente un lieu valentiel simple ou radical divalent choisi dans le groupe formé par les radicaux ;

$$-CH_2- \; ; \; -CH_2-CH_2- \; ; \; -\overset{CH_3}{\underset{CH_3}{C}}- \; ; \; -O- \; ; \; -S- \; ; \; -SO- \; ; \text{ et } -SO_2-;$$

. les symboles $R_6$, identiques ou différents, représentent chacun un atome d'hydrogène ou un radical méthyle ;

. les symboles $R_7$, identiques ou différents, représentent chacun un atome d'hydrogène ou un radical alkyle linéaire ou ramifié ayant de 1 à 6 atomes de carbone ou un radical phényle ;

- point 3 : le milieu de réaction, dans le cas où il est fait appel à un catalyseur (d), contient en tant que catalyseur un initiateur de polymérisation rédicalaire consistant dans un péroxyde organique ou l'azo-bis-isobutyronitrile.

**2.** Polymères selon le revendication 1, caractérisés en ce que le réactif (a) est pris dans le groupe formé par :
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,

- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,
- leurs mélanges.

**3.** Polymères selon l'une quelconque des revendications 1 et 2, caractérisés en ce que le réactif (b) est pris dans le groupe formé par :
- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis (amino-4 diméthyl-3,5 $\alpha,\alpha$-diméthylbenzyl)-1,4 benzène,
- le bis (amino-4 diméthyl-3,5 $\alpha,\alpha$-diméthylbenzyl)-1,3 benzène,
- le diamino-1,3 diéthyl-2,4 méthyl-6 benzène,
- le diamino-1,3 méthyl-2 diéthyl-4,6 benzène,
- et leurs mélanges.

**4.** Polymères selon l'une quelconque des revendications 1 à 3, caractérisés en ce que l'additif (e) consiste dans un composé choisi dans le groupe formé par :
* (e1) : une résine époxy chlorée ou bromée qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis(hydroxy-4 phényl)-2,2 propane, le bis(hydroxy-4 phényl) méthane, le bis(hydroxy-4 phényl méthyl-phényl-méthane, le bis-(hydroxy-4 phényl)tolyl-méthanes ; le résorcinol ; l'hydroquinone ; le pyrocatéchol ; le dihydroxy-4,4'diphényle ; et les produits de condensation des phénols précités avec un aldéhyde ;
* (e2) : un N,N'-alkylène-bis-tétrabromophtalimide ;
* (e3) : un bis(allyloxydibromophényl)alcane de formule :

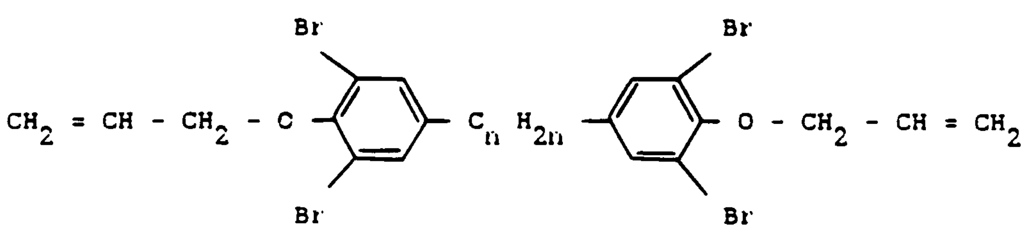

(VIII)

dans laquelle n est un nombre entier égal à 1, 2 ou 3 ;
* (e4) : une résine époxy non halogénée qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant dans la présente revendication à propos de la définition de la résine (e1) ;
* et (e5) un mélange de deux ou de plus de deux des composés (e1) à (e4) mentionnés ci-avant dans la présente revendication.

**5.** Polymères selon l'une quelconque des revendications 1 à 4, caractérisés on ce que l'additif (f) est constitué :
- soit par un ou plusieurs alkénylphénol(s) de formule (VII),
- soit par un mélange contenant (i) un ou plusieurs alkénylphénol(s) de formule (VII) et (2i) un ou plusieurs éther(s) allylique(s) correspondant(s) de ce (ou ces) phénol (s), c'est-à-dire un ou

plusieurs éther(s) allylique(s) duquel (ou desquels) dérive(nt) par transposition ce (ou ces) phénol(s).

**6.** Polymères selon la revendication 5, caractérisés en ce que le (ou les) alkénylphénol(s) de formule (VII) est(sont) pris dans le groupe formé par :
- le dihydroxy-4,4' diallyl-3,3' bisphényle,
- le bis(hydroxy-4 allyl-3 phényl)méthane,
- le bis(hydroxy-4 allyl-3 phényl)éther,
- le bis(hydroxy-4 allyl-3 phényl)-2,2 propane ou O,O'-diallyl-bisphénol A,
- l'éther méthylique correspondant à l'un ou l'autre des alkénylphénols précités.

**7.** Polymères selon l'une quelconque des revendications 1 à 6, caractérisés en ce que les quantités de N',N-bis-imide(s) (a) et de diamine(s) encombrés(s) (b) sont choisies de façon à ce que le rapport r :

$$\frac{\text{nombre de moles de bis-imide(s) (a)}}{\text{nombre de moles de diamine(s) (b)}}$$

se situe dans l'intervalle allant de 1,5/1 à 20/1.

**8.** Polymères selon l'une quelconque des revendications 1 à 7, caractérisés en ce que le réactif facultatif (c), quand il est utilisé, est employé en quantités représentant moins de 60 % du poids total des réactifs (a) + (b).

**9.** Polymères selon l'une quelconque des revendications 1 à 8, caractérisés en ce que le catalyseur facultatif (d), quand il est utilisé, est employé en quantités se situant dans l'intervalle allant de 0,01 à 5 % en poids par rapport à l'ensemble des réactifs (a) + (b) + éventuellement (c).

**10.** Polymères selon l'une quelconque des revendications 1 à 9, caractérisés en ce que d'une part la quantité d'additif (e) représente 2 à 30 % du poids du mélange bis-imide(s) (a) + diamine(s) (b) + éventuellement réactif (c), et d'autre part la quantité de chlore ou de brome qui peut être apportée par l'additif (e), exprimée par le pourcentage en poids de chlore élémentaire ou de brome élémentaire par rapport au poids du mélange global bis-imide(s) (a) + diamine(s) (b) + réactif facultatif (c) + additifs (e) et (f), représente au plus 8 %.

**11.** Polymères selon l'une quelconque des revendications 1 à 10, caractérisés en ce que la quantité de l'additif (f) représente 2 % à 30 % du poids du mélange bis-imide(s) (a) + diamine(s) (b) + éventuellement réactif (c).

**12.** Polymères selon l'une quelconque des revendications 1 à 11, caractérisés en ce qu'ils se trouvent sous forme de polymères durcis, insolubles dans les solvants organiques polaires suivants :
le dioxanne, le tétrahydrofuranne, l'oxyde de dibutyle, le diméthylformamide, le diméthylsulfoxyde, la N-méthylpyrrolidone, le diméthylacétamide, la cyclohexanone, le méthylglycol et la méthyl-éthyl-cétone et ne présentant pas de ramollissement au-dessous de la température à laquelle ils commencent à se dégrader.

**13.** Polymères selon l'une quelconque des revendications 1 à 11, caractérisés en ce qu'ils se trouvent sous forme de prépolymères thermodurcissables (P) solubles dans les solvants cités en revendication 12 usuels et présentent un point de ramollissement à une température inférieure à 200 °C.

**Revendications pour l'Etat contractant suivant : ES**

**1.** Procédé de préparation de polymères à groupements imides se trouvant sous forme de polymères durcis, insolubles dans les solvants suivants:
le dioxanne, le tetrahydrofuranne, l'oxyde de dibutyle, le diméthyleformamide, le diméthylesulfoxyde, la N-méthylepyrrolidone, le diméthyleacétamide, la cyclohexanone, le méthylglycol et la méthyle-éthyl-cétone et ne présentant pas de ramollissement au-dessous de la température à laquelle ils commencent à se dégrader, qui consiste à chauffer directement à une température comprise entre 50 ° C et 300 ° C le mélange des ingrédients suivants :

- (a) un N,N'-bis-imide ou une association de plusieurs bis-imides de formule :

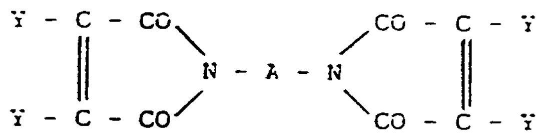

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylène ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

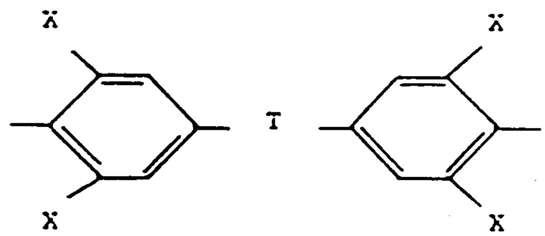

dans laquelle T représente un lien valentiel simple ou un groupement :

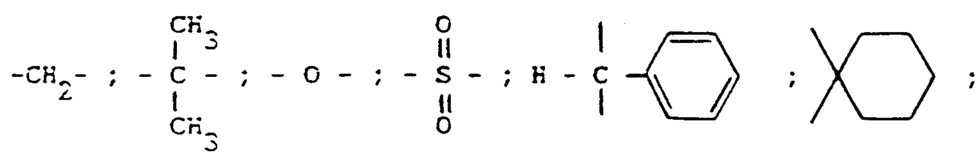

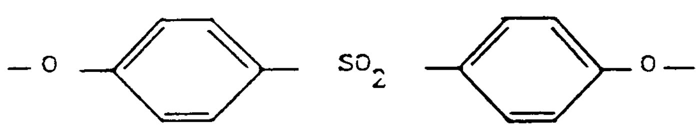

et les symboles X, identiques ou différents, représentent chacun un atome d'hydrogène, un radical méthyle, éthyle ou isopropyle ;

- (b) une ou plusieurs diamine(s) biprimaire(s) encombrée(s) ;
- (c) éventuellement un ou plusieurs monomère(s) non halogéné(s)

(c1) soit un ou plusieurs monomères de formule :

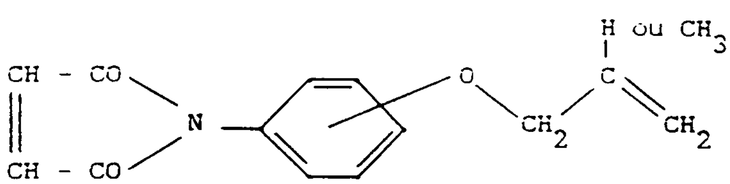

(IX)

dans laquelle le radical allyloxy ou méthallyloxy est en position ortho, métha ou par par rapport à l'atome de carbone du cycle benzénique relié à l'azote ;

(c2) soit un composé comprenant :

- un mélange d'un monomère de formule :

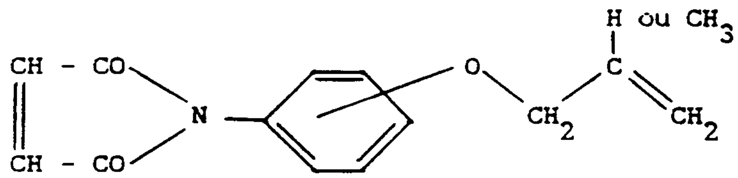

(IX)

dans laquelle le radical allyloxy ou méthallyloxy est en position ortho, méta ou para par rapport à l'atome de carbone du cycle benzénique relié à l'azote,

- avec :
  . au moins un dérivé monosubstitué de formule :

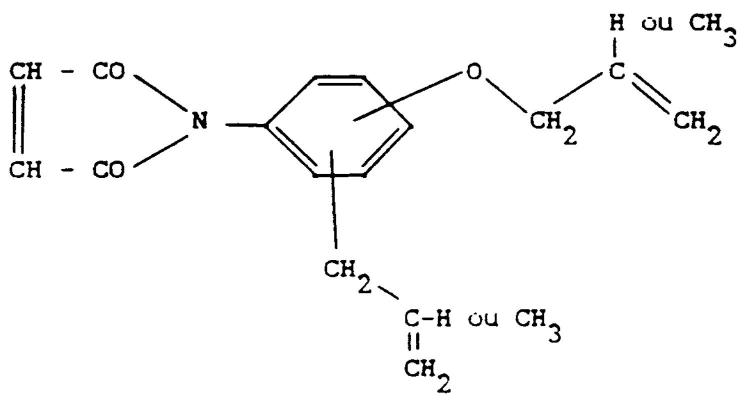

(X)

  . et éventuellement un ou plusieurs dérivé(s) disubstitué(s) de formule :

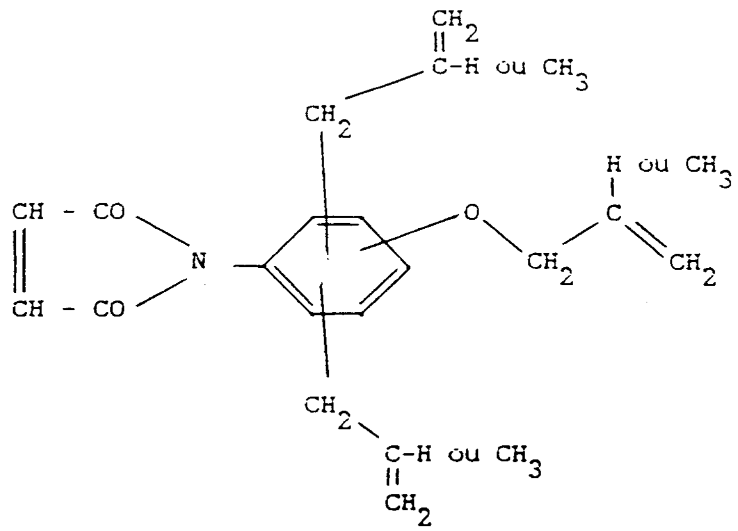

(XI)

(c3) soit un ou plusieurs hétérocycle(s) substitueé(s) comportant une ou plusieurs double(s) liaison-(s) carbone-carbone

- et (d) éventuellement un catalyseur de polymérisation ; lesdits polymères à groupements imides étant caractérisés par les points suivants :

- point 1 : le milieu de réaction qui sert à les préparer contient en tant que réactif aminé (b) une ou plusieurs diamine(s) biprimaire(s) encombrée(s) prise(s) dans le groupe formé par :

(i) les espèces répondant à la formule générale :

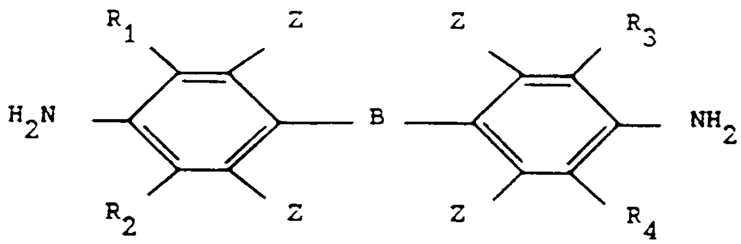 (IV)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydogène ou en atome de chlore ;

. le symbole B représente un radical divalent choisi dans le groupe formé par les radicaux : -$CH_2$ - ;

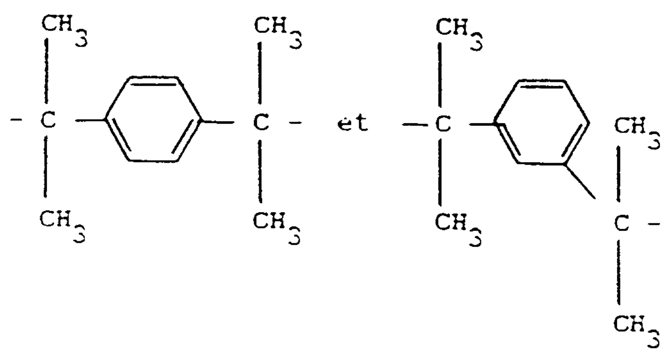

(2i) et les espèces répondant à la formule générale :

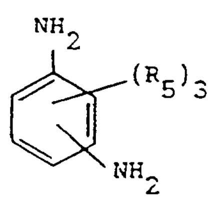 (III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ;

- point 2 : le milieu de réaction contient en outre deux additifs obligatoires (e) et (f) :

. (e) consistant dans un composé choisi dans le groupe formé par: * (e1) une résine époxy chlorée ou bromée ,

qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes;

le résorcinol ; l'hydroquinone ; le pyrocatéchol ; le dihydroxy-4,4' diphényle ; et les produits de condensation des phénols précités avec un aldéhyde;

* (e2) un N,N'-alkylène-bis-tétrahalogénophtalimide de formule :

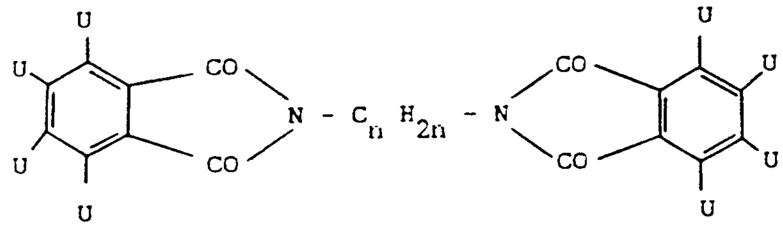

(V)

dans laquelle :

. les symboles U, identiques ou différents, représentent chacun un atome de chlore ou de brome ;

. le radical alkylène $-C_n H_{2n}-$ peut être linéaire ou ramifié ;

. n est un nombre entier égal à 1, 2, 3 ou 4 ;

* (e3) un produit halogéné de formule :

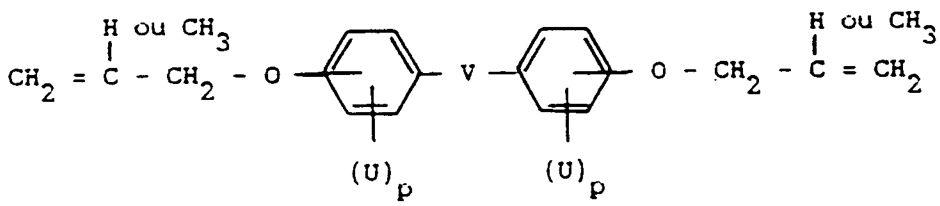

(VI)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (e4) une résine époxy non halogénée ,

qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant à propos de la définition de la résine (e1);

* et (e5) un mélange de deux ou de plus de deux des composés (e1) à (e4) précité entre eux ;

(f) consistant dans un composé comprenant un ou plusieurs alkénylphénol(s) de formule :

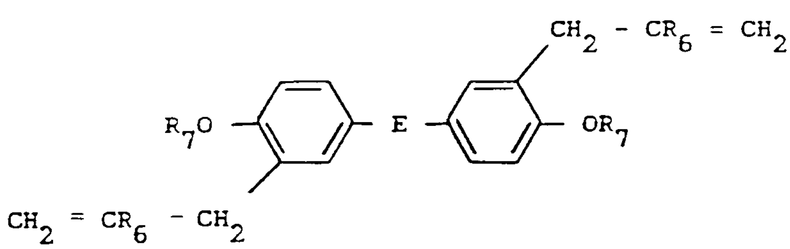

(VII)

dans laquelle :

. le symbole E représente un lieu valentiel simple ou radical divalent choisi dans le groupe formé par les radicaux ;

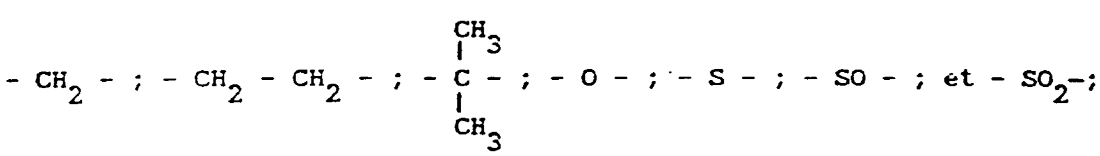

. les symboles $R_6$, identiques ou différents, représentent chacun un atome d'hydrogène ou un radical méthyle ;
. les symboles $R_7$, identiques ou différents, représentent chacun un atome d'hydrogène ou un radical alkyle linéaire ou ramifié ayant de 1 à 6 atomes de carbone ou un radical phényle ;

- point 3 : le milieu de réaction, dans le cas où il est fait appel à un catalyseur (d), contient en tant que catalyseur un initiateur de polymérisation rédicalaire consistant dans un péroxyde organique ou l'azo-bis-isobutyronitrile.

**2.** Procédé selon la revendication 1, caractérisé en ce que le réactif (a) est pris dans le groupe formé par :
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,
- leurs mélanges.

**3.** Procédé selon l'une quelconque des revendications 1 et 2, caractérisé en ce que le réactif (b) est pris dans le groupe formé par :
- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane;
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis (amino-4 diméthyl-3,5 $\alpha,\alpha$-diméthylbenzyl)-1,4 benzène,
- le bis (amino-4 diméthyl-3,5 $\alpha,\alpha$-diméthylbenzyl)-1,3 benzène,
- le diamino-1,3 diéthyl-2,4 méthyl-6 benzène,
- le diamino-1,3 méthyl-2 diéthyl-4,6 benzène,
- et leurs mélanges.

**4.** Procédé selon l'une quelconque des revendications 1 à 3, caractérisé en ce que l'additif (e) consiste dans un composé choisi dans le groupe formé par :
* (e1) : une résine époxy chlorée ou bromée qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis(hydroxy-4 phényl)-2,2 propane, le bis(hydroxy-4 phényl) méthane, le bis(hydroxy-4 phényl) méthyl-phényl-méthane, les bis-(hydroxy-4 phényl)tolyl-méthanes ; le résorcinol ; l'hydroquinone ; le pyrocatéchol ; le dihydroxy-4,4'diphényle ; et les produits de condensation des phénols précités avec un aldéhyde ;
* (e2) : un N,N'-alkylène-bis-tétrabromophtalimide ;
* (e3) : un bis(allyloxydibromophényl)alcane de formule :

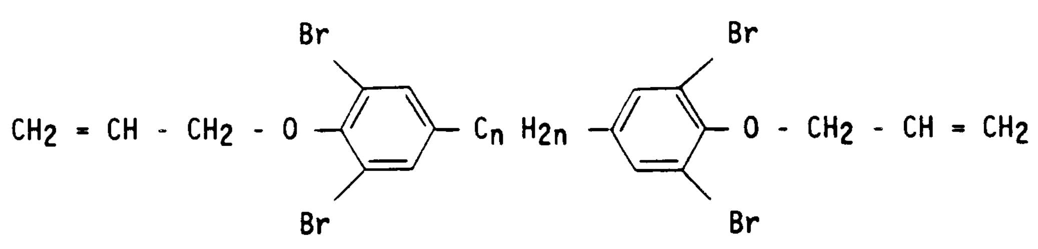
(VIII)

dans laquelle n est un nombre entier égal à 1, 2 ou 3 ;
* (e4) : une résine époxy non halogénée qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant dans la présente revendication à propos de la définition de la résine (e1) ;
* et (e5) un mélange de deux ou de plus de deux des composés (e1) à (e4) mentionnés ci-avant dans la présente revendication.

**5.** Procédé de préparation de polymères à groupements imides se trouvant sous forme de prépolymères thermodurcissables (P) solubles dans les solvants organiques polaires usuels et présentant un point de ramollissement à une température inférieure à 200 °C, qui consiste à chauffer directement le mélange des ingrédients (a) + (b) + (e) + (f) + éventuellement (c) + éventuellement (d) définis ci-avant dans la revendication 1 à une température comprise entre 50 °C et 180 °C jusqu'à l'obtention d'un produit homogène ou pâteux.

**6.** Procédé selon la revendication 1, caractérisé en ce qu'il consiste à chauffer le mélange des ingrédients de départ entre 50 °C et 180 °C pour former dans un premier temps un prépolymère (P), puis à provoquer le durcissement du prépolymère (P) par chauffage à une température comprise entre 150 °C et 300 °C.

**7.** Procédé selon l'une quelconque des revendications 1 à 6, caractérisé en ce que l'additif (f) est constitué :
- soit par un ou plusieurs alkénylphénol(s) de formule (VII),
- soit par un mélange contenant (i) un ou plusieurs alkénylphénol(s) de formule (VII) et (2i) un ou plusieurs éther(s) allylique(s) correspondant(s) de ce (ou ces) phénol(s), c'est-à-dire un ou plusieurs éther(s) allylique(s) duquel (ou desquels) dérive(nt) par transposition ce (ou ces) phénol-(s).

**8.** Procédé selon la revendication 7, caractérisé en ce que le (ou les) alkénylphénol(s) de formule (VII) est-(sont) pris dans le groupe formé par :
- le dihydroxy-4,4' diallyl-3,3' bisphényle,
- le bis(hydroxy-4 allyl-3 phényl)méthane,
- le bis(hydroxy-4 allyl-3 phényl)éther,
- le bis(hydroxy-4 allyl-3 phényl)-2,2 propane ou O,O'-diallyl-bisphénol A,
- l'éther méthylique correspondant à l'un ou l'autre des alkénylphénols précités.

**9.** Procédé selon l'une quelconque des revendications 1 à 8, caractérisé en ce que les quantités de N',N-bis-imide(s) (a) et de diamine(s) encombrée(s) (b) sont choisies de façon à ce que le rapport r :

$$\frac{\text{nombre de moles de bis-imide(s) (a)}}{\text{nombre de moles de diamine(s) (b)}}$$

se situe dans l'intervalle allant de 1,5/1 à 20/1.

**10.** Procédé selon l'une quelconque des revendications 1 à 9, caractérisé en ce que le réactif facultatif (c), quand il est utilisé, est employé en quantités représentant moins de 60 % du poids total des réactifs (a) + (b).

**11.** Procédé selon l'une quelconque des revendications 1 à 10, caractérisé en ce que le catalyseur facultatif (d), quand il est utilisé, est employé en quantités se situant dans l'intervalle allant de 0,01 à 5 % en poids par rapport à l'ensemble des réactifs (a) + (b) + éventuellement (c).

**12.** Procédé selon l'une quelconque des revendications 1 à 11, caractérisé en ce que d'une part la quantité d'additif (e) représente 2 à 30 % du poids du mélange bis-imide(s) (a) + diamine(s) (b) + éventuellement réactif (c), et d'autre part la quantité de chlore ou de brome qui peut être apportée par

l'additif (e), exprimée par le pourcentage en poids de chlore élémentaire ou de brome élémentaire par rapport au poids du mélange global bis-imide(s) (a) + diamine(s) (b) + réactif facultatif (c) + additifs (e) et (f), représente au plus 8 %.

**13.** Procédé selon l'une quelconque des revendications 1 à 12, caractérisé en ce que la quantité de l'additif (f) représente 2 % à 30 % du poids du mélange bis-imide(s) (a) + diamine(s) (b) + éventuellement réactif (c).

**Claims**

**Claims for the following Contracting States : AT, BE, CH, DE, DK, FR, GB, GR, IT, LI, LU, NL, SE**

**1.** A polymer containing imide groups and comprising the product of reaction, at a temperature ranging from 50 °C to 300 °C, between:

(a) an N,N'-bisimide or a combination of two or more bisimides of formula:

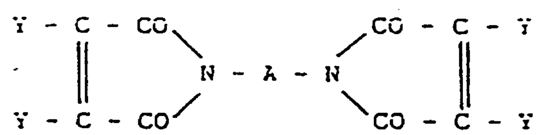

(I)

in which:

the symbols Y, which are identical or different, each represent H, $CH_3$ or Cl;

the symbol A represents a divalent radical chosen from the group consisting of the radicals: cyclohexylene; phenylenes; 4-methyl-1,3-phenylene; 2-methyl-1,3-phenylene; 5-methyl-1,3-phenylene; 2,5-diethyl-3-methyl-1,4-phenylene; and the radicals of formula:

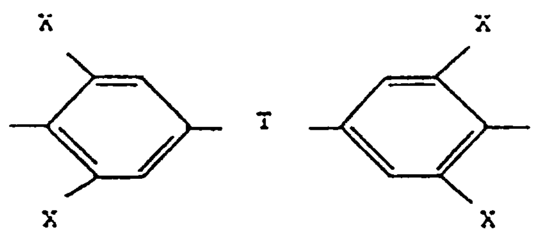

in which T represents a single valency bond or a group:

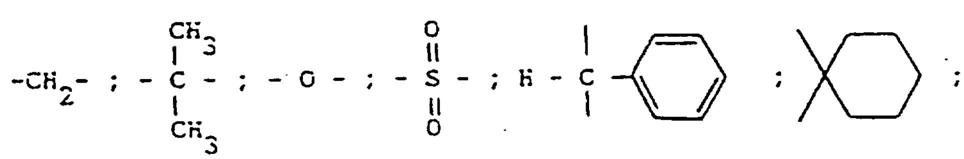

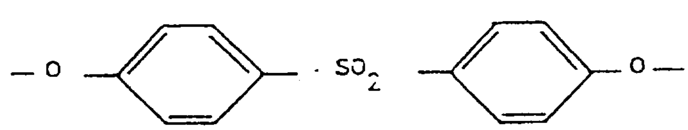

and the symbols X, which are identical or different, each represent a hydrogen atom or a methyl, ethyl or isopropyl radical;

(b) one or more sterically hindered diprimary diamines;

(c) optionally one or more non-halogenated monomers:

(c1) either one or more monomers of formula:

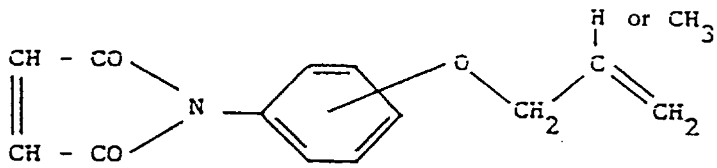

(IX)

in which the allyloxy or methallyloxy radical is in the ortho, meta or para position relative to that carbon atom of the benzene ring which is linked to the nitrogen;

(c2) or a compound comprising:

a mixture of a monomer of formula:

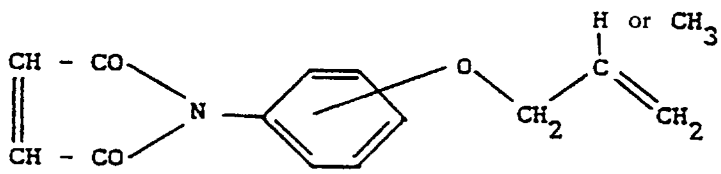

(IX)

in which the allyloxy or methallyloxy radical is in the ortho, meta or para position relative to that carbon atom of the benzene ring which is linked to the nitrogen,

with:

at least one monosubstituted derivative of formula:

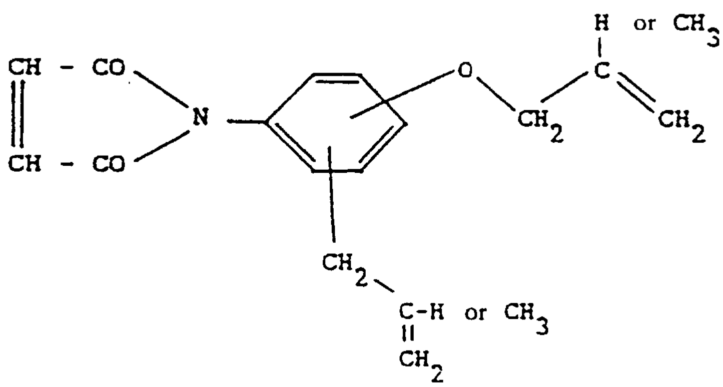

(X)

and optionally one or more disubstituted derivatives of formula:

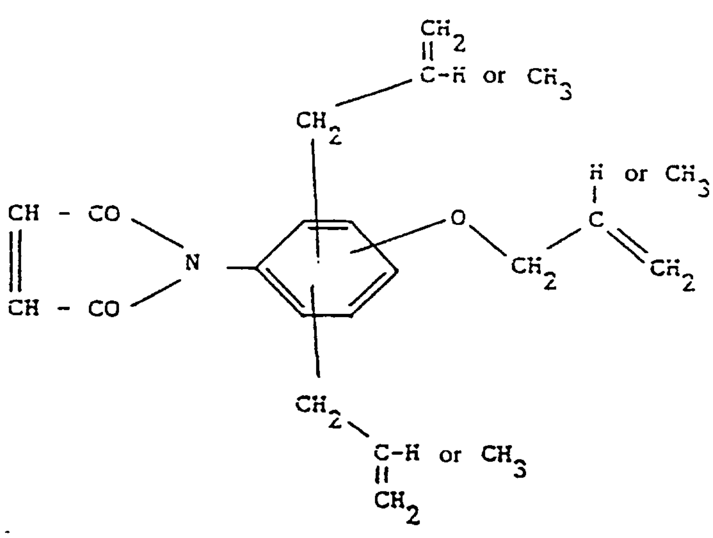

(XI)

(c3) or one or more substituted heterocycles containing one or more carbon-carbon double bonds and (d) optionally a polymerization catalyst;
the said polymer containing imide groups being characterized by the following points:

- point 1: the reaction medium used for their preparation contains, as amino reactant (b), one or more sterically hindered diprimary diamines taken from the group formed by:
(i) the species corresponding to the general formula:

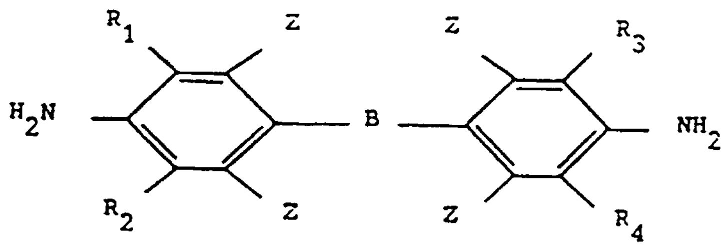

(IV)

in which:
the symbols $R_1$, $R_2$, $R_3$ and $R_4$, which are identical or different, each represent a methyl, ethyl, propyl or isopropyl radical;
the symbols Z, which are identical or different, each represent a hydrogen atom or a chlorine atom;
the symbol B represents a divalent radical chosen from the group formed by the radicals: $-CH_2-$;

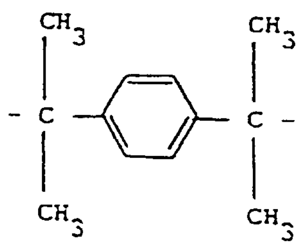 and 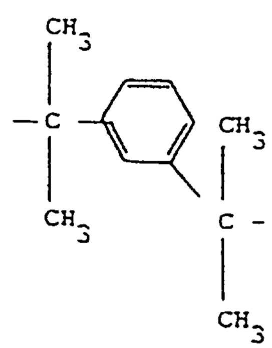

(2i) and the species corresponding to the general formula:

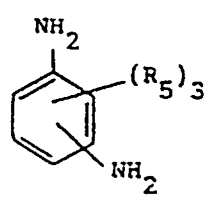

(III)

in which:
the amino radicals are in the meta or para position relative to one another;
the symbols $R_5$, which are identical or different, each represent a methyl, ethyl, propyl or isopropyl radical;

- point 2: the reaction medium additionally contains two obligatory additives (e) and (f):
(e) consisting of a compound chosen from the group formed by:
*(e1) a chlorinated or brominated epoxy resin which has an epoxide equivalent weight of between 200 and 2000 and which consists of a glycidyl ether obtained by reacting epichlorohydrin with a derivative, chlorinated or brominated on the aromatic ring(s), obtained from a polyphenol chosen from the group formed by: the family of the bis(hydroxyphenyl)alkanes; resorcinol; hydroquinone; pyrocatechol, 4,4'-dihydroxybiphenyl; and the condensation products of the abovementioned

phenols with an aldehyde;

*(e2) an N,N'-alkylenebistetrahalophthalimide of formula:

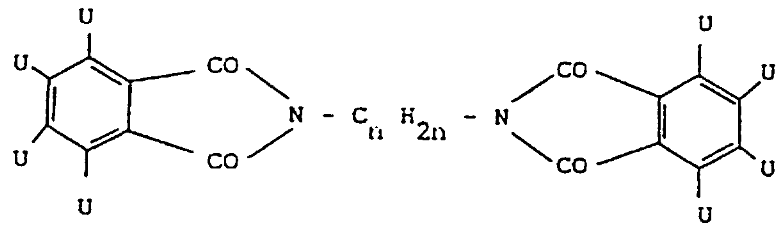

(V)

in which:

the symbols U, which are identical or different, each represent a chlorine or bromine atom;

the alkylene radical $-C_nH_{2n}-$ may be linear or branched;

n is an integer equal to 1, 2, 3 or 4;

*(e3) a halogenated product of formula:

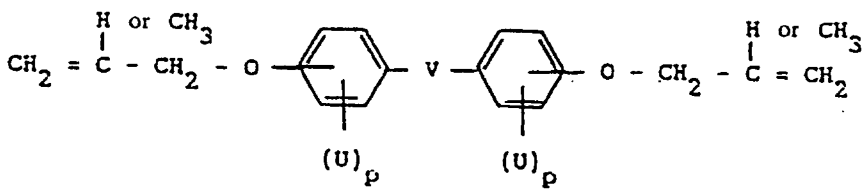

(VI)

in which:

the symbols U are as defined above;

the symbol V represents a single valency bond, a linear or branched alkylene radical $-C_nH_{2n}-$ where n is equal to 1, 2, 3 or 4, or an oxygen atom;

p is an integer equal to 2, 3 or 4;

*(e4) a non-halogenated epoxy resin which has an epoxide equivalent weight of between 100 and 1000 and which consists of a glycidyl ether obtained by reacting epichlorohydrin with a polyphenol which is not chlorinated or not brominated on the aromatic ring(s), chosen from the group of the phenols mentioned above with regard to the definition of the resin (e1);

* and (e5) a mixture of two or more of the abovementioned compounds (e1) to (e4) with one another;

(f) consisting of a compound comprising one or more alkenylphenols of formula:

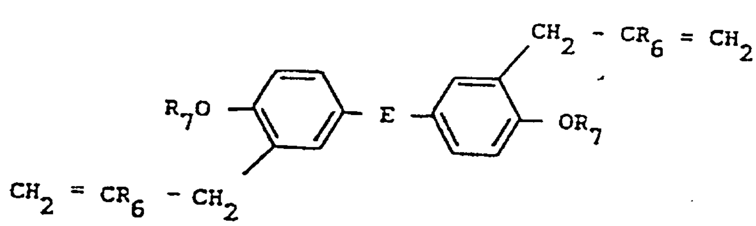

(VII)

in which:

the symbol E represents a single valency bond or a divalent radical chosen from the group formed by the radicals:

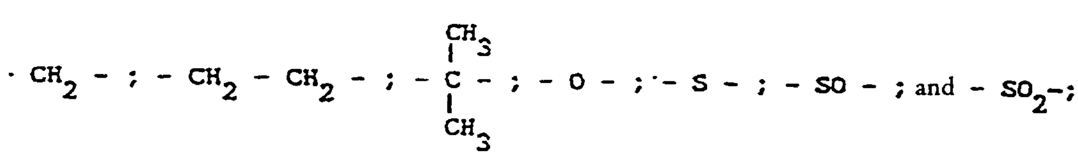

the symbols $R_6$, which are identical or different, each represent a hydrogen atom or a methyl radical;
the symbols $R_7$, which are identical or different, each represent a hydrogen atom or a linear or branched alkyl radical having from 1 to 6 carbon atoms, or a phenyl radical;

- point 3: the reaction medium, in the case where a catalyst (d) is used, contains as catalyst a free-radical polymerization initiator consisting of an organic peroxide or azo bis isobutyronitrile.

**2.** A polymer according to claim 1, characterized in that the reactant (a) is taken from the group formed by:
- N,N'-metaphenylene bis maleimide,
- N,N'-paraphenylene bis maleimide,
- N,N'-4,4'-diphenylmethane bis maleimide,
- N,N'-4,4'-diphenyl ether bis maleimide,
- N,N'-4,4'-diphenyl sulphone bis maleimide,
- N,N'-1,4-cyclohexylene bis maleimide,
- N,N'-4,4'-(1,1-diphenyl)cyclohexane bis maleimide,
- N,N'-4,4'-(2,2-diphenyl)propane bis maleimide,
- N,N'-4,4'-triphenylmethane bis maleimide,
- N,N'-2-methyl-1,3-phenylene bis maleimide,
- N,N'-4-methyl-1,3-phenylene bis maleimide,
- N,N'-5-methyl-1,3-phenylene bis maleimide,
- and mixtures thereof.

**3.** A polymer according to any one of claims 1 and 2, characterized in that the reactant (b) is taken from the group formed by:
- 4,4'-diamino-3,3',5,5'-tetramethyldiphenylmethane,
- 4,4'-diamino-3,3',5,5'-tetraethyldiphenylmethane,
- 4,4'-diamino-3,5-dimethyl-3',5'-diethyldiphenylmethane,
- 4,4'-diamino-3,3'-diethyl-5,5'-dimethyldiphenylmethane,
- 4,4'-diamino-3,3',5,5'-tetraisopropyldiphenylmethane,
- 4,4'-diamino-3,3'-diisopropyl-5,5'-dimethyldiphenylmethane,
- 1,4-bis(4-amino-3,5-dimethyl-α,α-dimethylbenzyl)benzene,
- 1,3-bis(4-amino-3,5-dimethyl-α,α-dimethylbenzyl)benzene,
- 1,3-diamino-2,4-diethyl-6-methylbenzene,
- 1,3-diamino-2-methyl-4,6-diethylbenzene,
- and mixtures thereof.

**4.** A polymer according to any one of claims 1 to 3, characterized in that the additive (e) consists of a compound chosen from the group formed by:
*(e1): a chlorinated or brominated epoxy resin which has an epoxide equivalent weight of between 200 and 2000 and which consists of a glycidyl ether obtained by reacting epichlorohydrin with a derivative, chlorinated or brominated on the aromatic ring(s), obtained from a polyphenol chosen from the group formed by: the family of the bis(hydroxyphenyl)alkanes such as 2,2-bis(4-hydroxyphenyl)propane, bis-(4-hydroxyphenyl)methane, bis(4-hydroxyphenyl)methylphenylmethane, bis(4-hydroxyphenyl)-tolylmethanes; resorcinol; hydroquinone; pyrocatechol; 4,4'-dihydroxydiphenyl; and the condensation products of the abovementioned phenols with an aldehyde;
*(e2): an N,N'-alkylene bis tetrabromophthalimide;
*(e3): a bis(allyloxydibromophenyl)alkane of formula:

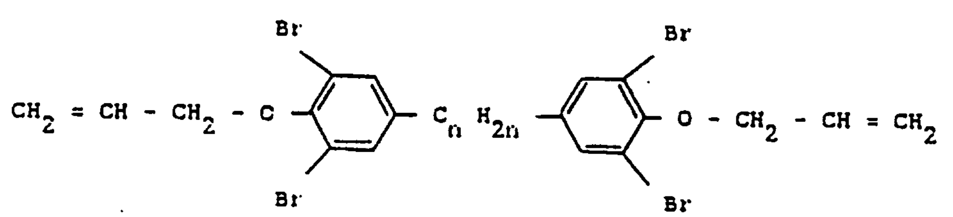

(VIII)

in which n is an integer equal to 1, 2 or 3;

*(e4): a non-halogenated epoxy resin which has an epoxide equivalent weight of between 100 and 1000 and which consists of a glycidyl ether obtained by reacting epichlorohydrin with a polyphenol which is not chlorinated or not brominated on the aromatic ring(s), chosen from the group of the phenols mentioned above in the present claim with regard to the definition of the resin (e1);
* and (e5) a mixture of two or more of the compounds (e1) to (e4) mentioned above in the present claim.

**5.** A polymer according to any one of claims 1 to 4, characterized in that the additive (f) consists:
either of one or more alkenylphenols of formula (VII),
or of a mixture containing (i) one or more alkenylphenols of formula (VII) and (2i) one or more corresponding allyl ethers of this (or these) phenol(s), that is to say one or more allyl ethers from which this (or these) phenol(s) is(are) derived by transposition.

**6.** A polymer according to claim 5, characterized in that the alkenylphenol(s) of formula (VII) is (are) taken from the group formed by:
- 4,4'-dihydroxy-3,3'-diallylbiphenyl,
- bis(4-hydroxy-3-allylphenyl) methane,
- bis(4-hydroxy-3-allylphenyl) ether,
- 2,2 bis(4-hydroxy-3-allylphenyl)propane or O,O'-diallylbisphenol A, or
- the methyl ether corresponding to one or other of the abovementioned alkenylphenols.

**7.** A polymer according to any one of claims 1 to 6, characterized in that the quantities of N',N-bisimide(s) (a) and of sterically hindered diamine(s) (b) are chosen such that the ratio r:

$$\frac{\text{number of moles of bisimide(s) (a)}}{\text{number of moles of diamine(s) (b)}}$$

is in the range from 1.5/1 to 20/1.

**8.** A polymer according to any one of claims 1 to 7, characterized in that the optional reactant (c), when it is used, is employed in quantities representing less than 60% of the total weight of reactants (a) + (b).

**9.** A polymer according to any one of claims 1 to 8, characterized in that the optional catalyst (d), when it is used, is employed in quantities which are within the range from 0.01 to 5% by weight relative to all of the reactants (a) + (b) + optionally (c).

**10.** A polymer according to any one of claims 1 to 9, characterized in that, on the one hand, the quantity of additive (e) represents 2 to 30% by weight of the mixture of bisimide(s) (a) + diamine(s) (b) + optionally reactant (c), and, on the other hand, the quantity of chlorine or bromine which may be contributed by the additive (e), expressed by the percentage by weight of elemental chlorine or elemental bromine relative to the weight of the overall mixture of bisimide(s) (a) + diamine(s) (b) + optional reactant (c) + additives (e) and (f), represents not more than 8%.

**11.** A polymer according to any one of claims 1 to 10, characterized in that the quantity of the additive (f) represents from 2% to 30% by weight of the mixture of bisimide(s) (a) + diamine(s) (b) + optionally reactant (c).

**12.** A polymer according to any one of claims 1 to 11, characterized in that it is in the form of a cured polymer which is insoluble in the following polar organic solvents:
dioxane, tetrahydrofuran, dibutyl oxide, dimethylformamide, dimethyl sulphoxide, N-methylpyrrolidone, dimethylacetamide, cyclohexanone, methylglycol and methyl ethyl ketone,
and does not exhibit any softening below the temperature at which it begins to decompose.

**13.** A polymer according to any one of claims 1 to 11, characterized in that it is in the form of a heat-curable prepolymer (P) which is soluble in the conventional solvents mentioned in claim 12 and has a softening point at a temperature below 200 °C.

**Claims for the following Contracting State : ES**

1. A process for the preparation of polymers which contain imide groups and are in the form of cured polymers which are insoluble in the following solvents:
dioxane, tetrahydrofuran, dibutyl oxide, dimethylformamide, dimethyl sulphoxide, N-methylpyrrolidone, dimethylacetamide, cyclohexanone, methylglycol and methyl ethyl ketone,
and do not exhibit any softening below the temperature at which they begin to decompose,
which consists in heating directly, at a temperature of between 50 °C and 300 °C, the mixture of the following ingredients:
(a) an N,N'-bisimide or a combination of two or more bisimides of formula:

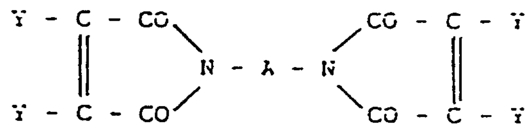

(I)

in which:
the symbols Y, which are identical or different, each represent H, $CH_3$ or Cl;
the symbol A represents a divalent radical chosen from the group consisting of the radicals: cyclohexylene; phenylenes; 4-methyl-1,3-phenylene; 2-methyl-1,3-phenylene; 5-methyl-1,3-phenylene; 2,5-diethyl-3-methyl-1,4-phenylene; and the radicals of formula:

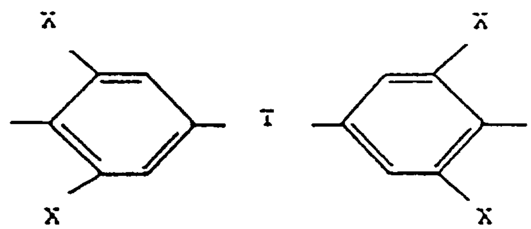

in which T represents a single valency bond or a group:

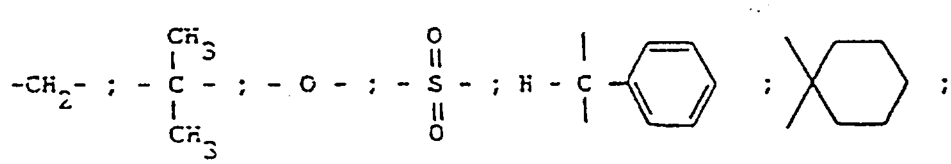

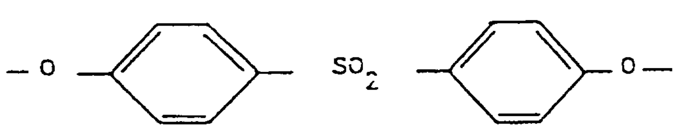

and the symbols X, which are identical or different, each represent a hydrogen atom or a methyl, ethyl or isopropyl radical;
(b) one or more sterically hindered diprimary diamines;
(c) optionally one or more non-halogenated monomers:
(c1) either one or more monomers of formula:

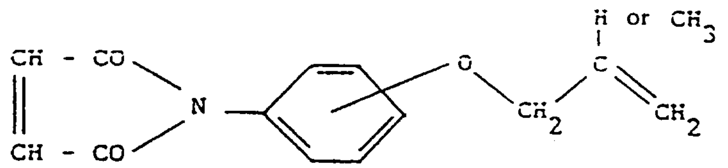

(IX)

in which the allyloxy or methallyloxy radical is in the ortho, meta or para position relative to that carbon atom of the benzene ring which is linked to the nitrogen;

(c2) or a compound comprising:

a mixture of a monomer of formula:

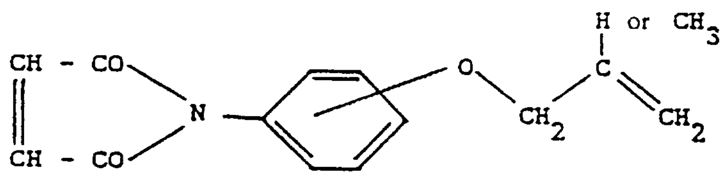

(IX)

in which the allyloxy or methallyloxy radical is in the ortho, meta or para position relative to that carbon atom of the benzene ring which is linked to the nitrogen,

with:

at least one monosubstituted derivative of formula:

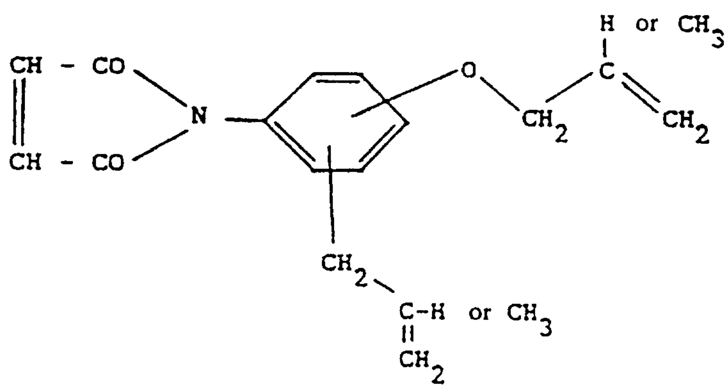

(X)

and optionally one or more disubstituted derivatives of formula:

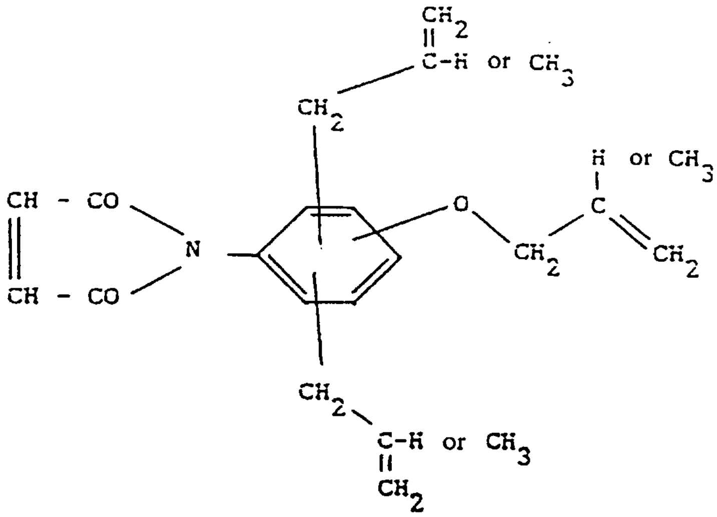

(XI)

(c3) or one or more substituted heterocycles containing one or more carbon-carbon double bonds and (d) optionally a polymerization catalyst;

the said polymers containing imide groups being characterized by the following points:

- point 1: the reaction medium used for their preparation contains, as amino reactant (b), one or more sterically hindered diprimary diamines taken from the group formed by:

  (i) the species corresponding to the general formula:

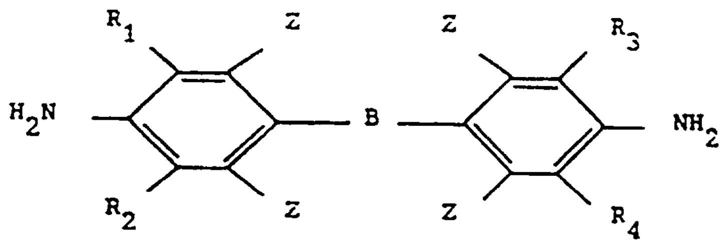

(IV)

in which:

the symbols $R_1$, $R_2$, $R_3$ and $R_4$, which are identical or different, each represent a methyl, ethyl, propyl or isopropyl radical;

the symbols Z, which are identical or different, each represent a hydrogen atom or a chlorine atom;

the symbol B represents a divalent radical chosen from the group formed by the radicals: $-CH_2-$;

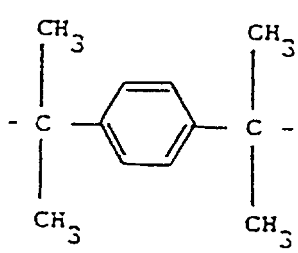

and

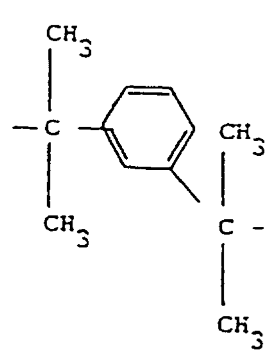

(2i) and the species corresponding to the general formula:

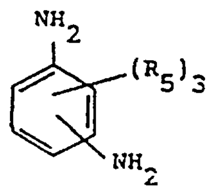

(III)

in which:
the amino radicals are in the meta or para position relative to one another;
the symbols $R_5$, which are identical or different, each represent a methyl, ethyl, propyl or isopropyl radical;

- point 2: the reaction medium additionally contains two obligatory additives (e) and (f):
(e) consisting of a compound chosen from the group formed by:
*(e1) a chlorinated or brominated epoxy resin which has an epoxide equivalent weight of between 200 and 2000 and which consists of a glycidyl ether obtained by reacting epichlorohydrin with a derivative, chlorinated or brominated on the aromatic ring(s), obtained from a polyphenol chosen from the group formed by: the family of the bis(hydroxyphenyl)alkanes; resorcinol; hydroquinone; pyrocatechol, 4,4'-dihydroxybiphenyl; and the condensation products of the abovementioned phenols with an aldehyde;
*(e2) an N,N'-alkylene bis tetrahalophthalimide of formula:

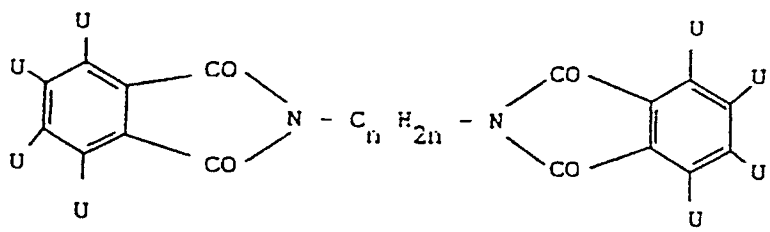

(V)

in which:
the symbols U, which are identical or different, each represent a chlorine or bromine atom;
the alkylene radical $-C_nH_{2n}-$ may be linear or branched;
n is an integer equal to 1, 2, 3 or 4;
*(e3) a halogenated product of formula:

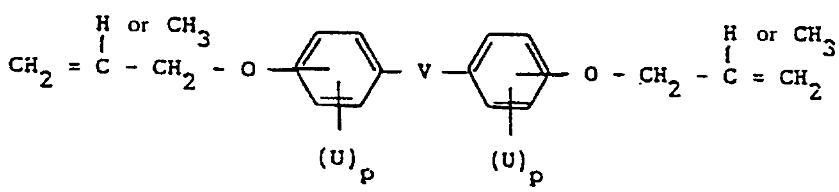

(VI)

in which:
the symbols U are as defined above;
the symbol V represents a single valency bond, a linear or branched alkylene radical $-C_nH_{2n}-$ where n is equal to 1, 2, 3 or 4, or an oxygen atom;
p is an integer equal to 2, 3 or 4;
*(e4) a non-halogenated epoxy resin which has an epoxide equivalent weight of between 100 and 1000 and which consists of a glycidyl ether obtained by reacting epichlorohydrin with a polyphenol which is not chlorinated or not brominated on the aromatic ring(s), chosen from the group of the phenols mentioned above with regard to the definition of the resin (e1);
* and (e5) a mixture of two or more of the abovementioned compounds (e1) to (e4) with one

another;
(f) consisting of a compound comprising one or more alkenylphenols of formula:

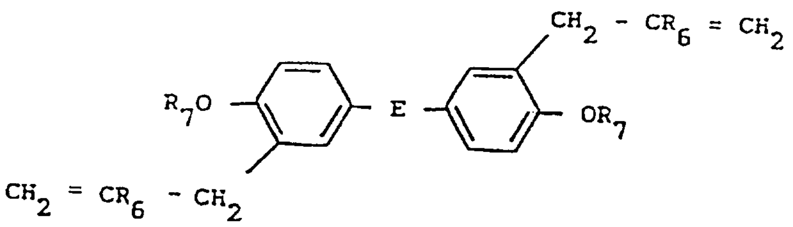

(VII)

in which:
the symbol E represents a single valency bond or a divalent radical chosen from the group formed by the radicals:

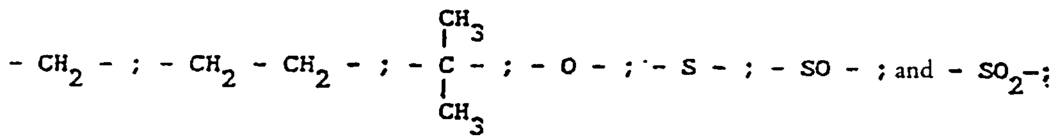

the symbols $R_6$, which are identical or different, each represent a hydrogen atom or a methyl radical;
the symbols $R_7$, which are identical or different, each represent a hydrogen atom or a linear or branched alkyl radical having from 1 to 6 carbon atoms, or a phenyl radical;
- point 3: the reaction medium, in the case where a catalyst (d) is used, contains as catalyst a free-radical polymerization initiator consisting of an organic peroxide or azo bis isobutyronitrile.

**2.** A process according to claim 1, characterized in that the reactant (a) is taken from the group formed by:
- N,N'-metaphenylene bis maleimide,
- N,N'-paraphenylene bis maleimide,
- N,N'-4,4'-diphenylmethane bis maleimide,
- N,N'-4,4'-diphenyl ether bis maleimide,
- N,N'-4,4'-diphenyl sulphone bis maleimide,
- N,N'-1,4-cyclohexylene bis maleimide,
- N,N'-4,4'-(1,1-diphenyl)cyclohexane bis maleimide,
- N,N'-4,4'-(2,2-diphenyl)propane bis maleimide,
- N,N'-4,4'-triphenylmethane bis maleimide,
- N,N'-2-methyl-1,3-phenylene bis maleimide,
- N,N'-4-methyl-1,3-phenylene bis maleimide,
- N,N'-5-methyl-1,3-phenylene bis maleimide,
- and mixtures thereof.

**3.** A process according to any one of claims 1 and 2, characterized in that the reactant (b) is taken from the group formed by:
- 4,4'-diamino-3,3',5,5'-tetramethyldiphenylmethane,
- 4,4'-diamino-3,3',5,5'-tetraethyldiphenylmethane,
- 4,4'-diamino-3,5-dimethyl-3',5'-diethyldiphenylmethane,
- 4,4'-diamino-3,3'-diethyl-5,5'-dimethyldiphenylmethane,
- 4,4'-diamino-3,3',5,5'-tetraisopropyldiphenylmethane,
- 4,4'-diamino-3,3'-diisopropyl-5,5'-dimethyldiphenylmethane,
- 1,4-bis(4-amino-3,5-dimethyl-α,α-dimethylbenzyl)benzene,
- 1,3-bis(4-amino-3,5-dimethyl-α,α-dimethylbenzyl)benzene,
- 1,3-diamino-2,4-diethyl-6-methylbenzene,
- 1,3-diamino-2-methyl-4,6-diethylbenzene,

- and mixtures thereof.

**4.** A process according to any one of claims 1 to 3, characterized in that the additive (e) consists of a compound chosen from the group formed by:
*(e1): a chlorinated or brominated epoxy resin which has an epoxide equivalent weight of between 200 and 2000 and which consists of a glycidyl ether obtained by reacting epichlorohydrin with a derivative, chlorinated or brominated on the aromatic ring(s), obtained from a polyphenol chosen from the group formed by: the family of the bis(hydroxyphenyl)alkanes such as 2,2-bis(4-hydroxyphenyl)propane, bis-(4-hydroxyphenyl)methane, bis(4-hydroxyphenyl)methylphenylmethane, bis(4-hydroxyphenyl)-tolylmethanes; resorcinol; hydroquinone; pyrocatechol; 4,4'-dihydroxydiphenyl; and the condensation products of the abovementioned phenols with an aldehyde;
*(e2): an N,N'-alkylene bis tetrabromophthalimide;
*(e3): a bis(allyloxydibromophenyl)alkane of formula:

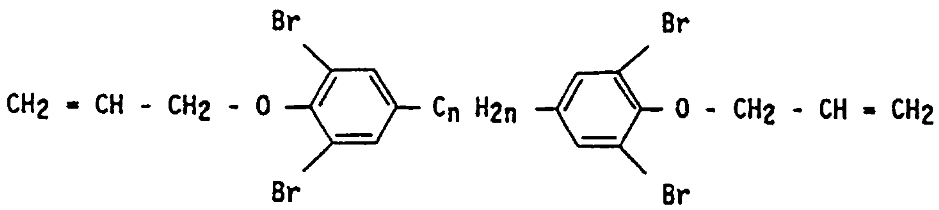
(VIII)

in which n is an integer equal to 1, 2 or 3;
*(e4): a non-halogenated epoxy resin which has an epoxide equivalent weight of between 100 and 1000 and which consists of a glycidyl ether obtained by reacting epichlorohydrin with a polyphenol which is not chlorinated or not brominated on the aromatic ring(s), chosen from the group of the phenols mentioned above in the present claim with regard to the definition of the resin (e1);
* and (e5) a mixture of two or more of the compounds (e1) to (e4) mentioned above in the present claim.

**5.** A process for the preparation of polymers which contain imide groups and are in the form of heat-curable prepolymers (P) which are soluble in the usual polar organic solvents and have a softening point at a temperature lower than 200 °C, which consists in heating directly the mixture of ingredients (a) + (b) + (e) + (f) + optionally (c) + optionally (d), as defined above in claim 1, to a temperature of between 50 °C and 180 °C until a homogeneous or pasty product is obtained.

**6.** A process according to claim 1, characterized in that it consists in heating the mixture of starting ingredients at between 50 °C and 180 °C in order to form, in a first stage, a prepolymer (P), then in causing the prepolymer (P) to cure by heating to a temperature of between 150 °C and 300 °C.

**7.** A process according to any one of claims 1 to 6, characterized in that the additive (f) consists:
either of one or more alkenylphenols of formula (VII),
or of a mixture containing (i) one or more alkenylphenols of formula (VII) and (2i) one or more corresponding allyl ethers of this (or these) phenol(s), that is to say one or more allyl ethers from which this (or these) phenol(s) is (are) derived by transposition.

**8.** A process according to claim 7, characterized in that the alkenylphenol(s) of formula (VII) is (are) taken from the group formed by:
- 4,4'-dihydroxy-3,3'-diallylbiphenyl,
- bis(4-hydroxy-3-allylphenyl) methane,
- bis(4-hydroxy-3-allylphenyl) ether,
- 2,2 bis(4-hydroxy-3-allylphenyl)propane or O,O'-diallylbisphenol A, or
- the methyl ether corresponding to one or other of the abovementioned alkenylphenols.

**9.** A process according to any one of claims 1 to 8, characterized in that the quantities of N',N-bisimide(s) (a) and of sterically hindered diamine(s) (b) are chosen such that the ratio r:

$$\frac{\text{number of moles of bisimide(s) (a)}}{\text{number of moles of diamine(s) (b)}}$$

is in the range from 1.5/1 to 20/1.

**10.** A process according to any one of claims 1 to 9, characterized in that the optional reactant (c), when it is used, is employed in quantities representing less than 60% of the total weight of reactants (a) + (b).

**11.** A process according to any one of claims 1 to 10, characterized in that the optional catalyst (d), when it is used, is employed in quantities which are within the range from 0.01 to 5% by weight relative to all of the reactants (a) + (b) + optionally (c).

**12.** A process according to any one of claims 1 to 11, characterized in that, on the one hand, the quantity of additive (e) represents 2 to 30% by weight of the mixture of bisimide(s) (a) + diamine(s) (b) + optionally reactant (c), and, on the other hand, the quantity of chlorine or bromine which may be contributed by the additive (e), expressed by the percentage by weight of elemental chlorine or elemental bromine relative to the weight of the overall mixture of bisimide(s) (a) + diamine(s) (b) + optional reactant (c) + additives (e) and (f), represents not more than 8%.

**13.** A process according to any one of claims 1 to 12, characterized in that the quantity of the additive (f) represents from 2% to 30% by weight of the mixture of bisimide(s) (a) + diamine(s) (b) + optionally reactant (c).

**Patentansprüche**
**Patentansprüche für folgende Vertragsstaaten : AT, BE, CH, DE, DK, FR, GB GR, IT, LI, LU, NL, SE**

**1.** Polymere mit Imidgruppen, dadurch gekennzeichnet, daß sie das Produkt einer bei einer Temperatur von 50 °C bis 300 °C durchgeführten Reaktion umfassen, und zwar zwischen
(a) einem N,N'-Bis-Imid oder einer Assoziation mehrerer Bis-Imide der Formel (I)

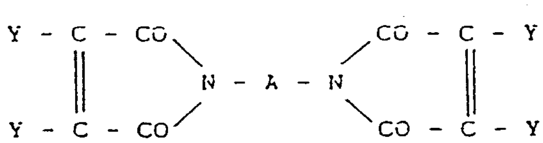

(I)

in der

- die Symbole Y, gleich oder verschieden, jeweils Wasserstoff, $CH_3$ oder Chlor darstellen,
- das Symbol A einen divalenten Rest bedeutet, ausgewählt aus der Gruppe der folgenden Reste: Cyclohexylen, Phenylene,4-Methyl-1,3-phenylen, 2-Methyl-1,3-phenylen, 5-Methyl-1,3-phenylen, 2,5-Diethyl-3-methyl-1,4-phenylen und den Resten der Formel

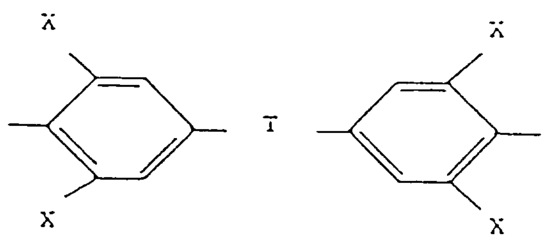

in der T eine einfache Valenzbindung oder eine Gruppe:

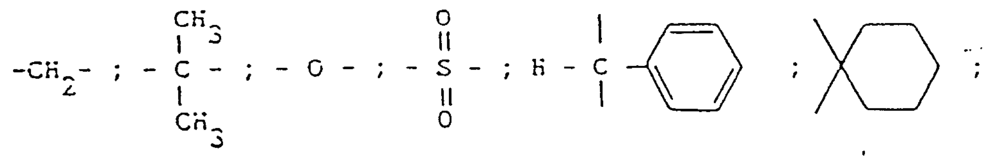

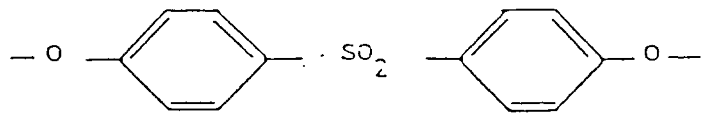

darstellt und die Symbole X, gleich oder verschieden, jeweils ein Wasserstoffatom, einen Methyl-, Ethyl- oder Isopropyl-Rest bedeuten,

(b) einem oder mehreren sterisch gehinderten biprimären Diaminen;

(c) gegebenenfalls ein oder mehrere nicht halogenierte Monomere,

(c1) entweder einem oder mehreren Monomeren der Formel (IX)

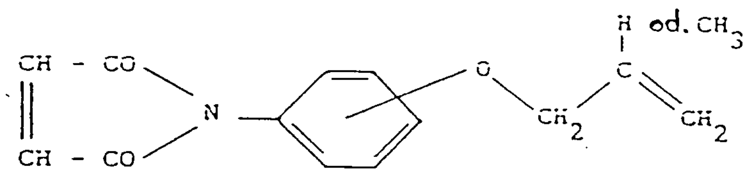

(IX)

in der sich der Allyloxy- oder Methallyloxy-Rest in ortho-, meta- oder para-Stellung befindet, bezogen auf das Kohlenstoffatom des Benzolringes, das mit dem Stickstoff verbunden ist; oder

(c2) einer Verbindung, die umfaßt:

- eine Mischung eines Monomers der Formel (IX)

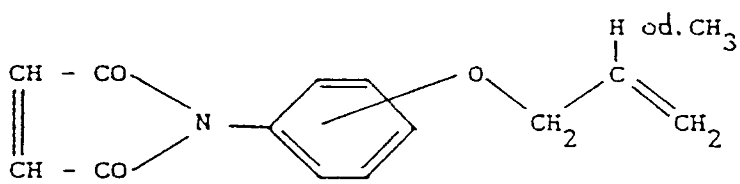

(IX)

in der sich der Allyloxy- oder Methallyloxy-Rest in ortho-, meta- oder para-Stellung befindet, bezogen auf das Kohlenstoffatom des Benzolringes, das mit dem Stickstoff verbunden ist;

- mit:
  - mindestens einem monosubstituierten Derivat der Formel (X)

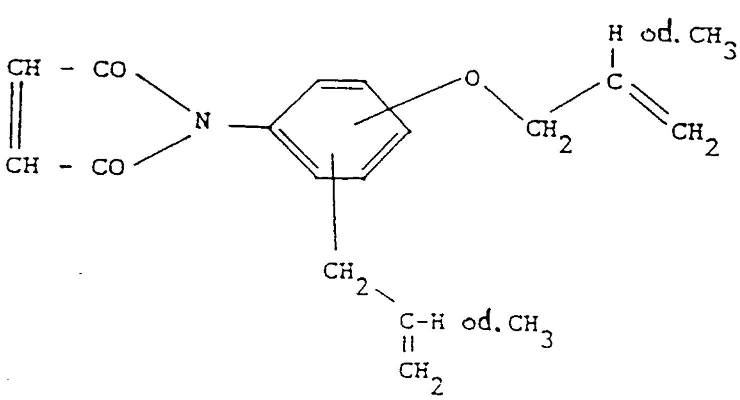

(X)

- und gegebenenfalls einem oder mehreren disubstituierten Derivaten der Formel (XI)

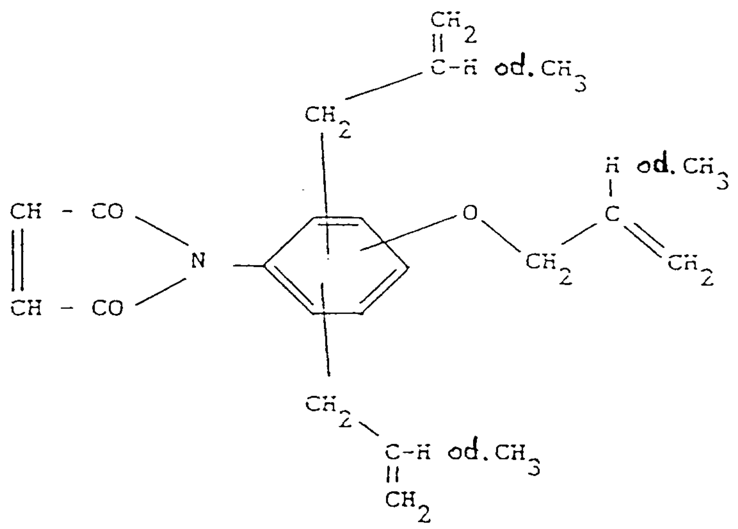

(XI)

oder

(c3) einem oder mehreren substituierten Heterocyclen, die eine oder mehrere Kohlenstoff-Kohlenstoff-Doppelbindungen umfassen, und

(d) gegebenenfalls einen Polymerisations-Katalysator; wobei die genannten Polymere mit Imidgruppen durch die folgenden Punkte gekennzeichnet sind:

- Punkt 1: das zur Herstellung dienende Reaktionsmedium enthält als Amino-Reaktionspartner (b) ein oder mehrere biprimäre, sterisch gehinderte Diamine, ausgewählt aus der Gruppe, die gebildet wird durch:

  (i) die Verbindungen der allgemeinen Formel (IV)

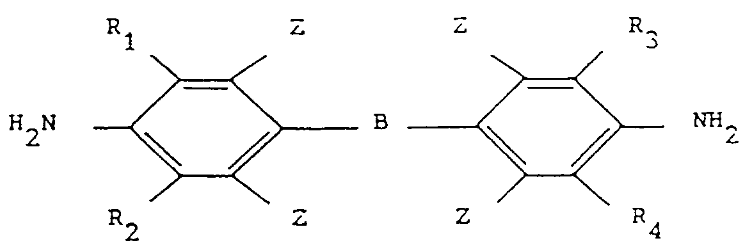

(IV)

in der

- die Symbole $R_1$, $R_2$, $R_3$ und $R_4$, gleich oder verschieden, jeweils einen Methyl-, Ethyl, Propyl- oder Isopropylrest darstellen;
- die Symbole Z, gleich oder verschieden, jeweils ein Wasserstoffatom oder ein Chloratom bedeuten;
- das Symbol B ein divalenter Rest ist, ausgewählt aus der Gruppe, die gebildet wird aus den Resten: $-CH_2-$;

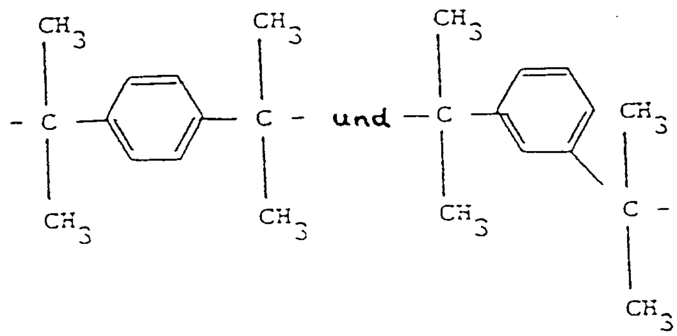

(2i) und die Verbindungen der allgemeinen Formel (III)

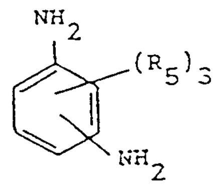

(III)

in der

- sich die Aminoreste untereinander in meta- oder para-Stellung befinden;
- die Symbole $R_5$, gleich oder verschieden, jeweils einen Methyl-, Ethyl-, Propyl- oder Isopropylrest darstellen

- Punkt 2: das Reaktionsmedium enthält außerdem zwei obligatorische Zusatzstoffe (e) und (f):

• (e) besteht aus einer Verbindung, ausgewählt aus der Gruppe, die gebildet wird durch:

* (e1) ein bromiertes oder chloriertes Epoxy-Harz mit einem Epoxy-Äquivalent-Gewicht zwischen 200 und 2000, das aus einem Glycid-Ether besteht, erhalten durch Reaktion mit dem Epichlorhydrin eines Derivates, das an dem oder den aromatischen Kern(en) bromiert oder chloriert ist, stammend von einem Polyphenol, ausgewählt aus der folgenden Gruppe: Familie der Bis-(Hydroxyphenyl)-alkane, Resorcin; Hydrochinon; Brenzkatechin; 4,4'-Dihydroxy-diphenyl; und den Kondensationsprodukten der obengenannten Phenole mit einem Aldehyd;

* (e2) ein N,N'-Alkylen-bis-tetrahalogenphthalimid der Formel (V)

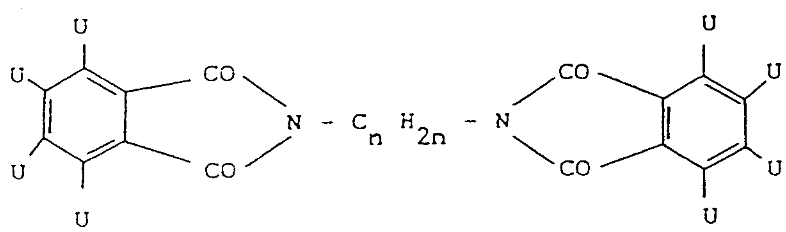

(V)

in der

- die Symbole U, gleich oder verschieden, jeweils ein Chloratom oder Bromatom darstellen;
- der Alkylenrest $-C_nH_{2n}-$ gerade oder verzweigt sein kann;
- n eine ganze Zahl von 1, 2, 3 oder 4 ist;

* (e3) ein halogeniertes Produkt der Formel (VI)

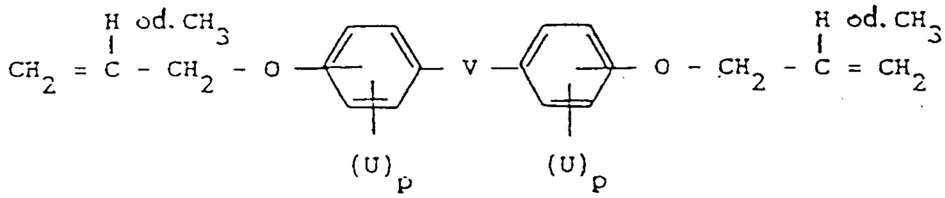

(VI)

in der

- die Symbole U die oben angegebene Bedeutung besitzen;
- das Symbol V eine einfache Valenzbindung, einen geraden oder verzweigten Alkylenrest $-C_nH_{2n}-$ mit n gleich 1, 2, 3 oder 4 oder ein Sauerstoffatom darstellt;
- p eine ganze Zahl von 2, 3 oder 4 ist;

* (e4) ein nicht halogeniertes Epoxy-Harz mit einem Epoxy-Äquivalent-Gewicht zwischen 100 und 1000, das aus einem Glycid-Ether besteht, erhalten durch Reaktion mit dem Epichlorhydrin eines Polyphenols, das an dem oder den aromatischen Kern(en) nicht bromiert oder chloriert ist, ausgewählt aus der bereits oben bei der Definition des Harzes (e1) erwähnten Gruppe von Phenolen; * und (e5) eine Mischung von zwei oder mehr als zwei der vorsteend genannten Verbindungen (e1) bis (e4) untereinander;

(f) besteht aus einer Verbindung, die ein oder mehrere Alkenylphenole der Formel (VII)

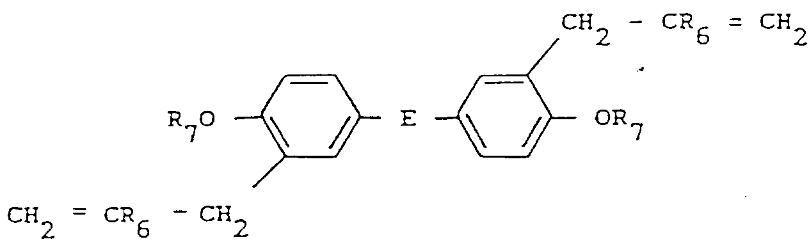

(VII)

umfaßt, in der

- das Symbol E eine einfache Valenzbindung oder einen divalenten Rest darstellt, ausgewählt aus der durch die folgenden Reste gebildeten Gruppe:

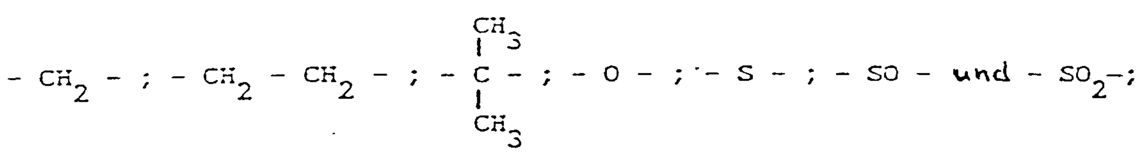

- die Symbole $R_6$, gleich oder verschieden, jeweils ein Wasserstoffatom oder einen Methylrest darstellen;
- die Symbole $R_7$, gleich oder verschieden, jeweils ein Wasserstoffatom oder einen geraden oder verzweigten Alkylrest mit 1 bis 6 Kohlenstoffatomen oder einen Phenylrest bedeuten;

- Punkt 3: das Reaktionsmedium enthält in dem Fall, wo man auf einen Katalysator (d) zurückgreift, als Katalysator einen radikalischen Polymerisations-Initiator, der aus einem organischen Peroxid oder aus Azo-bis-isobutyronitril besteht.

**2.** Polymere nach Anspruch 1, dadurch gekennzeichnet, daß der Reaktionspartner (a) aus der folgenden Gruppe ausgewählt wird:

- N,N'-Metaphenylen-bis-maleimid,
- N,N'-Paraphenylen-bis-maleimid,
- N,N'-4,4'-Diphenylmethan-bis-maleimid,
- N,N'-4,4'-Diphenylether-bis-maleimid,

- N,N'-4,4'-Diphenylsulfon-bis-maleimid,
- N,N'-1,4-Cyclohexylen-bis-maleimid,
- N,N'-4,4'-(1,1-Diphenyl-cyclohexan)-bis-maleimid,
- N,N'-4,4'-(2,2-Diphenyl-propan)-bis-maleimid,
- N,N'-4,4'-Triphenylmethan-bis-maleimid,
- N,N'-2-Methyl-1,3-phenylen-bis-maleimid,
- N,N'-4-Methyl-1,3-phenylen-bis-maleimid,
- N,N'-5-Methyl-1,3-phenylen-bis-maleimid,
- ihren Mischungen.

**3.** Polymere nach irgendeinem der Ansprüche 1 und 2, dadurch gekennzeichnet, daß der Reaktionspartner (b) aus der folgenden Gruppe ausgewählt wird:
- 4,4'-Diamino-3,3',5,5'-tetramethyl-diphenylmethan,
- 4,4'-Diamino-3,3',5,5'-tetraethyl-diphenylmethan,
- 4,4'-Diamino-3,5-dimethyl-3',5'-diethyl-diphenylmethan,
- 4,4'-Diamino-3,3'-diethyl-5,5'-dimethyl-diphenylmethan,
- 4,4'-Diamino-3,3',5,5'-tetraisopropyl-diphenylmethan,
- 4,4'-Diamino-3,3'-diisopropyl-5,5'-dimethyl-diphenylmethan,
- Bis-1,4-(4-Amino-3,5-dimethyl-α,α-dimethylbenzyl)-benzol,
- Bis-1,3-(4-Amino-3,5-dimethyl-α,α-dimethylbenzyl)-benzol,
- 1,3-Diamino-2,4-diethyl-6-methyl-benzol,
- 1,3-Diamino-2-methyl-4,6-diethyl-benzol,
- und ihren Mischungen.

**4.** Polymere nach irgendeinem der Ansprüche 1 bis 3, dadurch gekennzeichnet, daß der Zusatzstoff (e) aus einer aus der folgenden Gruppe ausgewählten Verbindung besteht:
* (e1) ein bromiertes oder chloriertes Epoxy-Harz mit einem Epoxy-Äquivalent-Gewicht zwischen 200 und 2000, das aus einem Glycid-Ether besteht, erhalten durch Reaktion mit dem Epichlorhydrin eines Derivates, das an dem oder den aromatischen Kern(en) bromiert oder chloriert ist, stammend von einem Polyphenol, ausgewählt aus der folgenden Gruppe: Familie der Bis(Hydroxyphenyl)-alkane wie Bis-2,2-(4-Hydroxyphenyl)-propan, Bis-(4-Hydroxyphenyl)-methan, Bis-(4-Hydroxyphenyl)-methylphenylmethan, Bis-(4-Hydroxyphenyl)-tolyl-methane; Resorcin; Hydrochinon; Brenzkatechin; 4,4'-Dihydroxy-diphenyl; und den Kondensationsprodukten der obengenannten Phenole mit einem Aldehyd;
* (e2) ein N,N'-Alkylen-bis-tetrabromphthalimid;
* (e3) ein Bis-(Allyloxydibromphenyl)-alkan der Formel (VIII)

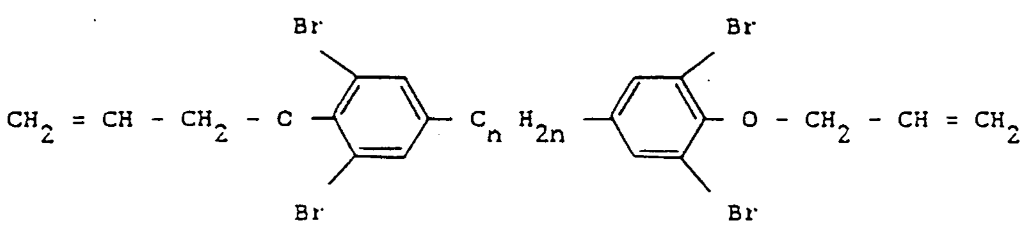

(VIII)

in der n eine ganze Zahl von 1, 2 oder 3 ist;
* (e4) ein nicht halogeniertes Epoxy-Harz mit einem Epoxy-Äquivalent-Gewicht zwischen 100 und 1000, das aus einem Glycid-Ether besteht, erhalten durch Reaktion mit dem Epichlorhydrin eines Polyphenols, das an dem oder den aromatischen Kern(en) nicht bromiert oder chloriert ist, ausgewählt aus der bereits oben in dem vorliegenden Anspruch bei der Definition des Harzes (e1) erwähnten Gruppe von Phenolen;
* und (e5) eine Mischung von zwei oder mehr als zwei der oben in dem vorliegenden Anspruch genannten Verbindungen (e1) bis (e4) untereinander.

**5.** Polymere nach irgendeinem der Ansprüche 1 bis 4, dadurch gekennzeichnet, daß der Zusatzstoff (f) besteht aus:
- entweder einem oder mehreren Alkylphenolen der Formel (VII),

- oder aus einer Mischung, die (i) ein oder mehrere Alkylphenole der Formel (VII) und (2i) ein oder mehrere diesem oder diesen Phenol(en) entsprechende Allylether enthält, das heißt, ein oder mehrere Allylether, die sich durch Transposition von diesem(n) Phenol(en) ableiten.

**6.** Polymere nach Anspruch 5, dadurch gekennzeichnet, daß das oder die Alkylphenol(e) der Formel (VII) aus der Gruppe ausgewählt werde, die gebildet wird durch:
- 4-4'-Dihydroxy-3,3'-diallyl-bisphenyl,
- Bis-(4-Hydroxy-3-allylphenyl)-methan,
- Bis-(4-Hydroxy-3-allylphenyl)-ether,
- Bis-2,2-(4-Hydroxy-3-allylphenyl)-propan oder O,O'-Diallylbisphenol A,
- den Methylether, der dem einem oder anderen der vorstehend genannten Alkenylphenole entspricht.

**7.** Polymere nach irgendeinem der Ansprüche 1 bis 6, dadurch gekennzeichnet, daß die Mengen von N,N'-Bis-Imid(en) (a) und sterisch gehindertem(n) Diamin(en) (b) in der Weise gewählt werden, daß das Verhältnis r:

$$\frac{\text{Anzahl der Mole Bis-Imid(e) (a)}}{\text{Anzahl der Mole Diamin(e) (b)}}$$

im Intervall von 1,5/1 bis 20/1 liegt.

**8.** Polymere nach irgendeinem der Ansprüche 1 bis 7, dadurch gekennzeichnet, daß der wahlweise Reaktionspartner (c) im Fall seiner Verwendung in Mengen eingesetzt wird, die mindestens 60 % des Gesamtgewichtes der Reaktionspartner (a) + (b) entsprechen.

**9.** Polymere nach irgendeinem der Ansprüche 1 bis 8, dadurch gekennzeichnet, daß der wahlweise Katalysator (d) im Fall seiner Verwendung in Mengen eingesetzt wird, die im Intervall von 0,01 bis 5 Gewichtsprozent liegen, bezogen auf die Gesamtheit der Reaktionspartner (a) + (b) + gegebenenfalls (c).

**10.** Polymere nach irgendeinem der Ansprüche 1 bis 9, dadurch gekennzeichnet, daß einerseits die Menge an Zusatzstoff (e) 2 bis 30 % des Gewichtes der Mischung Bis-Imid(e) (a) + Diamin(e) (b) + gegebenenfalls Reaktionspartner (c) darstellt und andererseits die durch den Zusatzstoff (e) eingebrachte Menge an Chlor oder Brom, ausgedrückt in Gewichtsprozent von elementarem Chlor oder elementarem Brom, bezogen auf das Gewicht der Gesamtmischung Bis-Imid(e) (a) + Diamin(e) (b) + wahlweiser Reaktionspartner (c) + Zusatzstoffe (e) und (f), höchstens 8 % ausmacht.

**11.** Polymere nach irgendeinem der Ansprüche 1 bis 10, dadurch gekennzeichnet, daß die Menge an Zusatzstoff (f) 2 bis 30 % des Gewichtes der Mischung Bis-Imid(e) (a) + Diamin(e) (b) + gegebenenfalls Reaktionspartner (c) darstellt.

**12.** Polymere nach irgendeinem der Ansprüche 1 bis 11, dadurch gekennzeichnet, daß sie in Form von gehärteten Polymeren vorliegen, unlöslich in den folgenden polaren organischen Lösungsmitteln: Dioxan, Tetrahydrofuran, Dibutyloxid, Dimethylformamid, Dimethylsulfoxid, N-Methylpyrrolidon, Dimethylacetamid, Cyclohexanon, Methylglycol und Methylethylceton, und daß sie unterhalb der Temperatur, bei der sie beginnen sich zu zersetzen, keine Erweichung zeigen.

**13.** Polymere nach irgendeinem der Ansprüche 1 bis 11, dadurch gekennzeichnet, daß sie in Form von wärmehärtbaren Prepolymeren (P) vorliegen, löslich in den in Anspruch 12 genannten üblichen Lösungsmitteln, und einen Erweichungspunkt bei einer Temperatur von unterhalb 200 °C aufweisen.

**Patentansprüche für folgenden Vertragsstaat : ES**

**1.** Verfahren zur Herstellung von Polymeren mit Imidgruppen, die in Form von gehärteten Polymeren vorliegen, unlöslich in den folgenden Lösungsmitteln: Dioxan, Tetrahydrofuran, Dibutyloxid, Dimethylformamid, Dimethylsulfoxid, N-Methylpyrrolidon, Dimethylacetamid, Cyclohexanon, Methylglycol und Methylethylceton, und die unterhalb der Temperatur, bei der sie beginnen sich zu zersetzen, keine Erweichung zeigen, das darin besteht, die Mischung der folgenden Bestandteile direkt auf eine Temperatur zwischen 50 °C und 300 °C zu erhitzen:

(a) ein N,N'-Bis-Imid oder eine Assoziation mehrerer Bis-Imide der Formel (I)

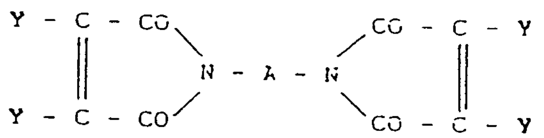

(I)

in der

- die Symbole Y, gleich oder verschieden, jeweils Wasserstoff, $CH_3$ oder Chlor darstellen,
- das Symbol A einen divalenten Rest bedeutet, ausgewählt aus der Gruppe der folgenden Reste: Cyclohexylen, Phenylene,4-Methyl-1,3-phenylen, 2-Methyl-1,3-phenylen, 5-Methyl-1,3-phenylen, 2,5-Diethyl-3-methyl-1,4-phenylen und den Resten der Formel

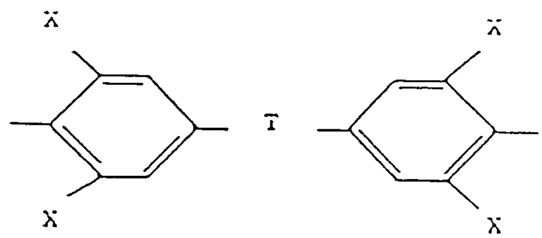

in der T eine einfache Valenzbindung oder eine Gruppe:

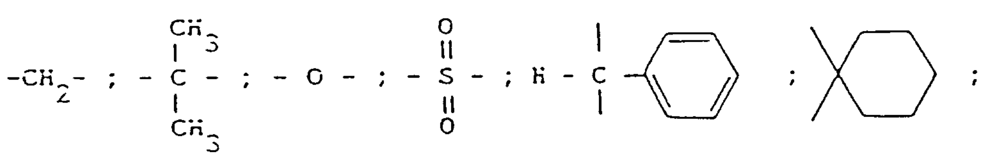

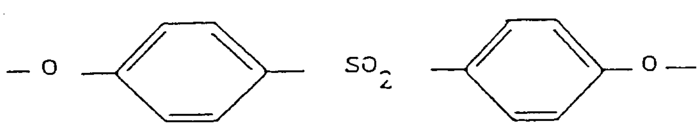

darstellt und die Symbole X, gleich oder verschieden, jeweils ein Wasserstoffatom, einen Methyl-, Ethyl- oder Isopropyl-Rest bedeuten,

(b) ein oder mehrere sterisch gehinderte biprimäre Diamine;

(c) gegebenenfalls ein oder mehrere nicht halogenierte Monomere,

(c1) entweder ein oder mehrere Monomere der Formel (IX)

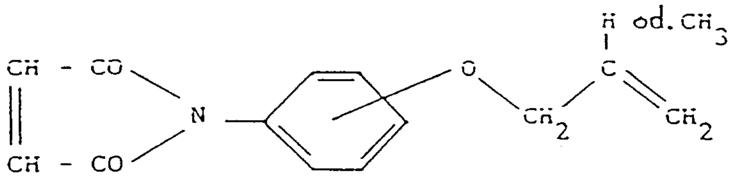

(IX)

in der sich der Allyloxy- oder Methallyloxy-Rest in ortho-, meta- oder para-Stellung befindet, bezogen auf das Kohlenstoffatom des Benzolringes, das mit dem Stickstoff verbunden ist; oder

(c2) eine Verbindung, die umfaßt:

- eine Mischung eines Monomers der Formel (IX)

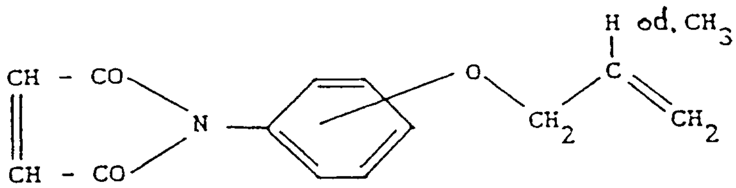

(IX)

in der sich der Allyloxy- oder Methallyloxy-Rest in ortho-, meta- oder para-Stellung befindet, bezogen auf das Kohlenstoffatom des Benzolringes, das mit dem Stickstoff verbunden ist;

- mit:
  - mindestens einem monosubstituierten Derivat der Formel (X)

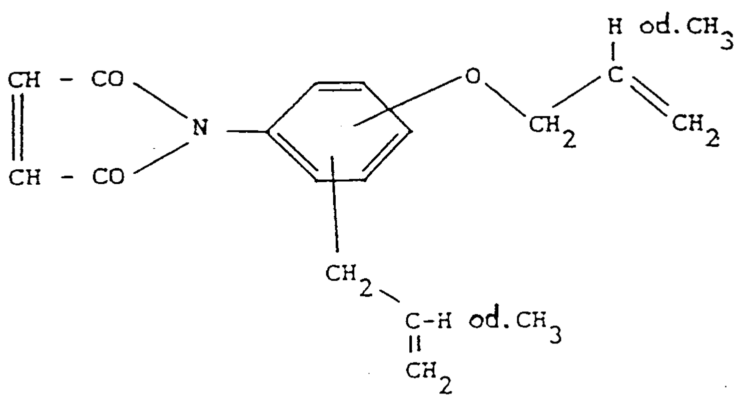

(X)

- und gegebenenfalls einem oder mehreren disubstituierten Derivaten der Formel (XI)

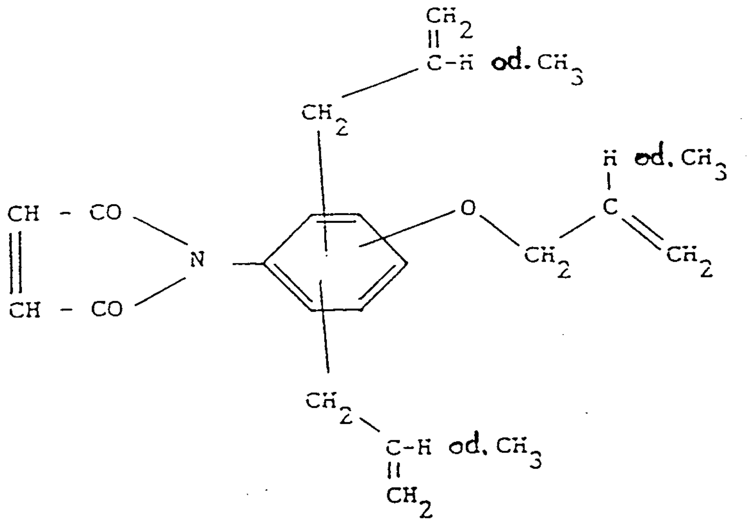

(XI)

oder

(c3) einem oder mehreren substituierten Heterocyclen, die eine oder mehrere Kohlenstoff-Kohlenstoff-Doppelbindungen umfassen, und

(d) gegebenenfalls einen Polymerisations-Katalysator; wobei die genannten Polymere mit Imidgruppen durch die folgenden Punkte gekennzeichnet sind:

- Punkt 1: das zur Herstellung dienende Reaktionsmedium enthält als Amino-Reaktionspartner (b) ein oder mehrere biprimäre, sterisch gehinderte Diamine, ausgewählt aus der Gruppe, die gebildet wird durch:

  (i) die Verbindungen der allgemeinen Formel (IV)

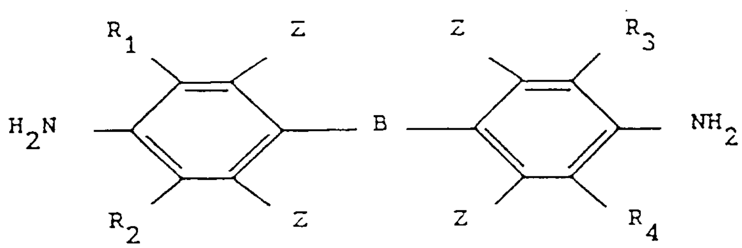

(IV)

in der

- die Symbole $R_1$, $R_2$, $R_3$ und $R_4$, gleich oder verschieden, jeweils einen Methyl-, Ethyl, Propyl- oder Isopropylrest darstellen;
- die Symbole Z, gleich oder verschieden, jeweils ein Wasserstoffatom oder ein Chloratom bedeuten;
- das Symbol B ein divalenter Rest ist, ausgewählt aus der Gruppe, die gebildet wird aus den Resten: $-CH_2-$;

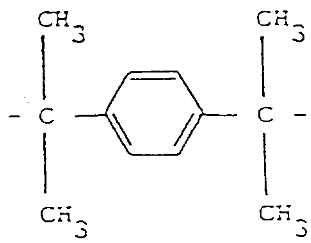

und

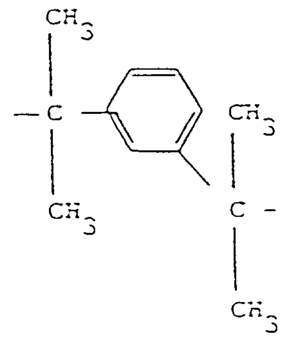

(2i) und die Verbindungen der allgemeinen Formel (III)

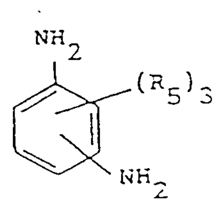

(III)

in der

- sich die Aminoreste untereinander in meta- oder para-Stellung befinden;
- die Symbole $R_5$, gleich oder verschieden, jeweils einen Methyl-, Ethyl-, Propyl- oder Isopropylrest darstellen

- Punkt 2: das Reaktionsmedium enthält außerdem zwei obligatorische Zusatzstoffe (e) und (f):
  - (e) besteht aus einer Verbindung, ausgewählt aus der Gruppe, die gebildet wird durch:
  
  * (e1) ein bromiertes oder chloriertes Epoxy-Harz mit einem Epoxy-Äquivalent-Gewicht zwischen 200 und 2000, das aus einem Glycid-Ether besteht, erhalten durch Reaktion mit dem Epichlorhydrin eines Derivates, das an dem oder den aromatischen Kern(en) bromiert oder chloriert ist, stammend von einem Polyphenol, ausgewählt aus der folgenden Gruppe: Familie der Bis-(Hydroxyphenyl)-alkane, Resorcin; Hydrochinon; Brenzkatechin; 4,4'-Dihydroxy-diphenyl; und den Kondensationsprodukten der obengenannten Phenole mit einem Aldehyd;
  
  * (e2) ein N,N'-Alkylen-bis-tetrahalogenphthalimid der Formel (V)

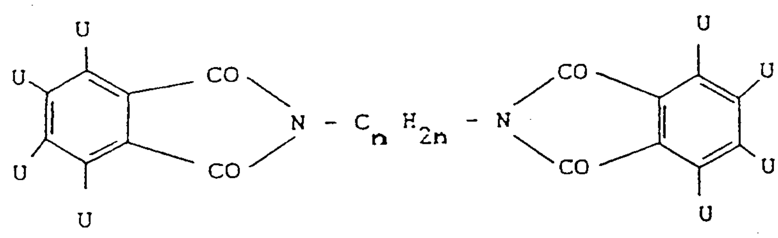

(V)

in der

- die Symbole U, gleich oder verschieden, jeweils ein Chloratom oder Bromatom darstellen;
- der Alkylenrest $-C_nH_{2n}-$ gerade oder verzweigt sein kann;
- n eine ganze Zahl von 1, 2, 3 oder 4 ist;

* (e3) ein halogeniertes Produkt der Formel (VI)

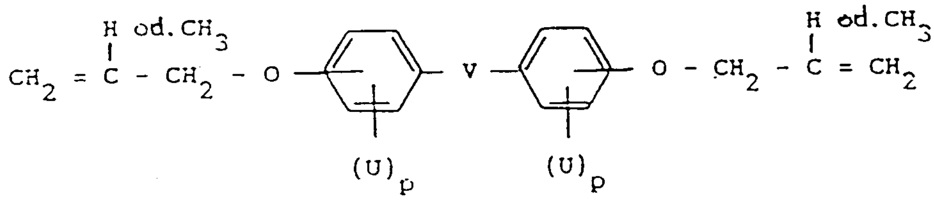

(VI)

in der

- die Symbole U die oben angegebene Bedeutung besitzen;
- das Symbol V eine einfache Valenzbindung, einen geraden oder verzweigten Alkylenrest $-C_nH_{2n}-$ mit n gleich 1, 2, 3 oder 4 oder ein Sauerstoffatom darstellt;
- p eine ganze Zahl von 2, 3 oder 4 ist;

* (e4) ein nicht halogeniertes Epoxy-Harz mit einem Epoxy-Äquivalent-Gewicht zwischen 100 und 1000, das aus einem Glycid-Ether besteht, erhalten durch Reaktion mit dem Epichlorhydrin eines Polyphenols, das an dem oder den aromatischen Kern(en) nicht bromiert oder chloriert ist, ausgewählt aus der bereits oben bei der Definition des Harzes (e1) erwähnten Gruppe von Phenolen;

* und (e5) eine Mischung von zwei oder mehr als zwei der vorstehend genannten Verbindungen (e1) bis (e4) untereinander;

(f) besteht aus einer Verbindung, die ein oder mehrere Alkenylphenole der Formel (VII)

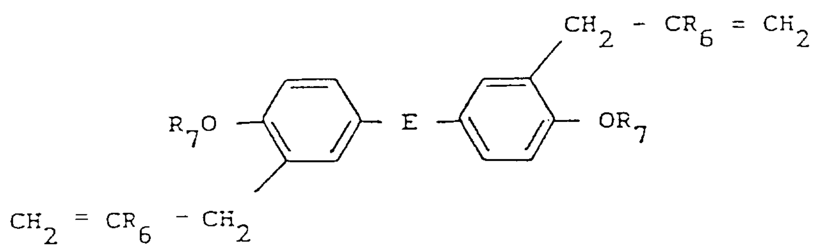

(VII)

umfaßt, in der

- das Symbol E eine einfache Valenzbindung oder einen divalenten Rest darstellt, ausgewählt aus der durch die folgenden Reste gebildeten Gruppe:

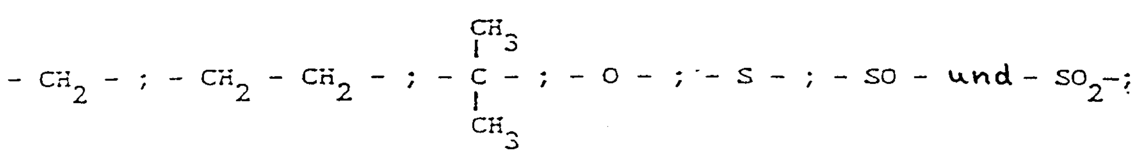

- die Symbole $R_6$, gleich oder verschieden, jeweils ein Wasserstoffatom oder einen Methylrest darstellen;
- die Symbole $R_7$, gleich oder verschieden, jeweils ein Wasserstoffatom oder einen geraden oder verzweigten Alkylrest mit 1 bis 6 Kohlenstoffatomen oder einen Phenylrest bedeuten;

- Punkt 3: das Reaktionsmedium enthält in dem Fall, wo man auf einen Katalysator (d) zurückgreift, als Katalysator einen radikalischen Polymerisations-Initiator, der aus einem organischen Peroxid oder aus Azo-bis-isobutyronitril besteht.

**2.** Verfahren nach Anspruch 1, dadurch gekennzeichnet, daß der Reaktionspartner (a) aus der folgenden Gruppe ausgewählt wird:

- N,N'-Metaphenylen-bis-maleimid,
- N,N'-Paraphenylen-bis-maleimid,
- N,N'-4,4'-Diphenylmethan-bis-maleimid,
- N,N'-4,4'-Diphenylether-bis-maleimid,
- N,N'-4,4'-Diphenylsulfon-bis-maleimid,

- N,N'-1,4-Cyclohexylen-bis-maleimid,
- N,N'-4,4'-(1,1-Diphenyl-cyclohexan)-bis-maleimid,
- N,N'-4,4'-(2,2-Diphenyl-propan)-bis-maleimid,
- N,N'-4,4'-Triphenylmethan-bis-maleimid,
- N,N'-2-Methyl-1,3-phenylen-bis-maleimid,
- N,N'-4-Methyl-1,3-phenylen-bis-maleimid,
- N,N'-5-Methyl-1,3-phenylen-bis-maleimid,
- ihren Mischungen

**3.** Verfahren nach irgendeinem der Ansprüche 1 und 2, dadurch gekennzeichnet, daß der Reaktionspartner (b) aus der folgenden Gruppe ausgewählt wird:
- 4,4'-Diamino-3,3',5,5'-tetramethyl-diphenylmethan,
- 4,4'-Diamino-3,3',5,5'-tetraethyl-diphenylmethan,
- 4,4'-Diamino-3,5-dimethyl-3',5'-diethyl-diphenylmethan,
- 4,4'-Diamino-3,3'-diethyl-5,5'-dimethyl-diphenylmethan,
- 4,4'-Diamino-3,3',5,5'-tetraisopropyl-diphenylmethan,
- 4,4'-Diamino-3,3'-diisopropyl-5,5'-dimethyl-diphenylmethan,
- Bis-1,4-(4-Amino-3,5-dimethyl-α,α-dimethylbenzyl)-benzol,
- Bis-1,3-(4-Amino-3,5-dimethyl-α,α-dimethylbenzyl)-benzol,
- 1,3-Diamino-2,4-diethyl-6-methyl-benzol,
- 1,3-Diamino-2-methyl-4,6-diethyl-benzol,
- und ihren Mischungen

**4.** Verfahren nach irgendeinem der Ansprüche 1 bis 3, dadurch gekennzeichnet, daß der Zusatzstoff (e) aus einer aus der folgenden Gruppe ausgewählten Verbindung besteht:
* (e1) ein bromiertes oder chloriertes Epoxy-Harz mit einem Epoxy-Äquivalent-Gewicht zwischen 200 und 2000, das aus einem Glycid-Ether besteht, erhalten durch Reaktion mit dem Epichlorhydrin eines Derivates, das an dem oder den aromatischen Kern(en) bromiert oder chloriert ist, stammend von einem Polyphenol, ausgewählt aus der folgenden Gruppe: Familie der Bis(Hydroxyphenyl)-alkane wie Bis-2,2-(4-Hydroxyphenyl)-propan, Bis-(4-Hydroxyphenyl)-methan, Bis-(4-Hydroxyphenyl)-methylphenylmethan, Bis-(4-Hydroxyphenyl)-tolyl-methane; Resorcin; Hydrochinon; Brenzkatechin; 4,4'-Dihydroxydiphenyl; und den Kondensationsprodukten der obengenannten Phenole mit einem Aldehyd;
* (e2) ein N,N'-Alkylen-bis-tetrabromphthalimid;
* (e3) ein Bis-(Allyloxydibromphenyl)-alkan der Formel (VIII)

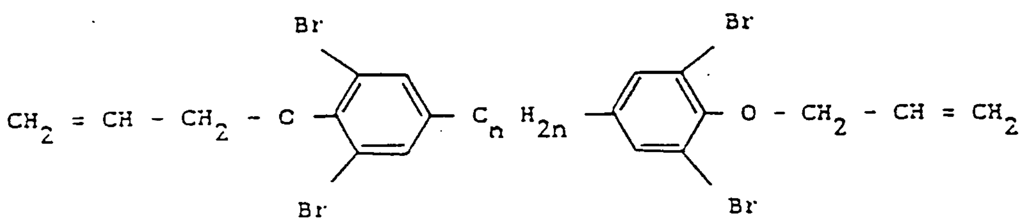

(VIII)

in der n eine ganze Zahl von 1, 2 oder 3 ist;
* (e4) ein nicht halogeniertes Epoxy-Harz mit einem Epoxy-Äquivalent-Gewicht zwischen 100 und 1000, das aus einem Glycid-Ether besteht, erhalten durch Reaktion mit dem Epichlorhydrin eines Polyphenols, das an dem oder den aromatischen Kern(en) nicht bromiert oder chloriert ist, ausgewählt aus der bereits oben in dem vorliegenden Anspruch bei der Definition des Harzes (e1) erwähnten Gruppe von Phenolen;
* und (e5) eine Mischung von zwei oder mehr als zwei der oben in dem vorliegenden Anspruch genannten Verbindungen (e1) bis (e4) untereinander.

**5.** Verfahren zur Herstellung von Polymeren mit Imid-Gruppen, die in Form von wärmehärtbaren Prepolymeren (P) vorliegen, löslich in den üblichen polaren organischen Lösungsmitteln, und einen Erweichungspunkt bei einer Temperatur von unterhalb 200 °C aufweisen, das darin besteht, die wie vorstehend in Anspruch 1 definierte Mischung der Bestandteile (a) + (b) + (e) + (f) + gegebenenfalls (c) + gegebenenfalls (d) direkt auf eine Temperatur von 50 °C bis 180 °C bis zum vorliegen eines

homogenen oder pastösen Produktes zu erhitzen.

**6.** Verfahren nach Anspruch 1, dadurch gekennzeichnet, daß es darin besteht, die Mischung der Ausgangsbestandteile auf eine Temperatur zwischen 50 °C und 180 °C zu erhitzen, um in einem ersten Zeitraum ein Prepolymer (P) zu bilden, und anschließend die Härtung des Prepolymers (P) durch Erhitzen auf eine Temperatur zwischen 150 °C und 300 °C durchzuführen.

**7.** Verfahren nach irgendeinem der Ansprüche 1 bis 6, dadurch gekennzeichnet, daß der Zusatzstoff (f) besteht aus:
- entweder einem oder mehreren Alkylphenolen der Formel (VII),
- oder aus einer Mischung, die (i) ein oder mehrere Alkylphenole der Formel (VII) und (2i) ein oder mehrere diesem oder diesen Phenol(en) entsprechende Allylether enthält, das heißt, ein oder mehrere Allylether, die sich durch Transposition von diesem(n) Phenol(en) ableiten.

**8.** Verfahren nach Anspruch 7, dadurch gekennzeichnet, daß das oder die Alkylphenol(e) der Formel (VII) aus der Gruppe ausgewählt werde, die gebildet wird durch:
- 4,4'-Dihydroxy-3,3'-diallyl-bisphenyl,
- Bis-(4-Hydroxy-3-allylphenyl)-methan,
- Bis-(4-Hydroxy-3-allylphenyl)-ether,
- Bis-2,2-(4-Hydroxy-3-allylphenyl)-propan oder O,O'-Diallylbisphenol A,
- den Methylether, der dem einem oder anderen der vorstehend genannten Alkenylphenole entspricht.

**9.** Verfahren nach irgendeinem der Ansprüche 1 bis 8, dadurch gekennzeichnet, daß die Mengen von N,N'-Bis-Imid(en) (a) und sterisch gehindertem(n) Diamin(en) (b) in der Weise gewählt werden, daß das Verhältnis r:

$$\frac{\text{Anzahl der Mole Bis-Imid(e) (a)}}{\text{Anzahl der Mole Diamin(e) (b)}}$$

im Intervall von 1,5/1 bis 20/1 liegt.

**10.** Verfahren nach irgendeinem der Ansprüche 1 bis 9, dadurch gekennzeichnet, daß der wahlweise Reaktionspartner (c) im Fall seiner Verwendung in Mengen eingesetzt wird, die mindestens 60 % des Gesamtgewichtes der Reaktionspartner (a) + (b) entsprechen.

**11.** Verfahren nach irgendeinem der Ansprüche 1 bis 10, dadurch gekennzeichnet, daß der wahlweise Katalysator (d) im Fall seiner Verwendung in Mengen eingesetzt wird, die im Intervall von 0,01 bis 5 Gewichtsprozent liegen, bezogen auf die Gesamtheit der Reaktionspartner (a) + (b) + gegebenenfalls (c).

**12.** Verfahren nach irgendeinem der Ansprüche 1 bis 11, dadurch gekennzeichnet, daß einerseits die Menge an Zusatzstoff (e) 2 bis 30 % des Gewichtes der Mischung Bis-Imid(e) (a) + Diamin(e) (b) + gegebenenfalls Reaktionspartner (c) darstellt und andererseits die durch den Zusatzstoff (e) eingebrachte Menge an Chlor oder Brom, ausgedrückt in Gewichtsprozent von elementarem Chlor oder elementarem Brom, bezogen auf das Gewicht der Gesamt mischung Bis-Imid(e) (a) + Diamin(e) (b) + wahlweiser Reaktionspartner (c) + Zusatzstoffe (e) und (f), höchstens 8 % ausmacht.

**13.** Verfahren nach irgendeinem der Ansprüche 1 bis 12, dadurch gekennzeichnet, daß die Menge an Zusatzstoff (f) 2 bis 30 % des Gewichtes der Mischung Bis-Imid(e) (a) + Diamin(e) (b) + gegebenenfalls Reaktionspartner (c) darstellt.